# EUROPEAN PATENT APPLICATION

(11) **EP 2 437 363 A1**
(43) Date of publication of application: **04.04.2012**
(21) Application number: 10774927.7
(22) Date of filing: 12.05.2010
(51) Int. Cl.: H02G 3/04, H01B 13/012

(54) **METHOD OF MANUFACTURING WIRE HARNESSES**

(30) Priority: 12.05.2009 JP 2009115780
(71) Applicant: AutoNetworks Technologies, Ltd., Yokkaichi-shi, Mie 510-8503 (JP); Sumitomo Wiring Systems, Ltd., Yokkaichi-shi, Mie-ken 510-8503 (JP); Sumitomo Electric Industries, Ltd., Chuo-ku Osaka-shi Osaka 541-0041 (JP)
(72) Inventor: MURATA, Atsushi, Yokkaichi-shi Mie 510-8503 (JP); HIRANO, Nobuyuki, Yokkaichi-shi Mie 510-8503 (JP); SATO, Osamu, Yokkaichi-shi Mie 510-8503 (JP)
(74) Representative: Winter, Brandl, Fürniss, Hübner, Röss, Kaiser, Polte - Partnerschaft
(86) International application number: PCT/JP2010/058015
(87) International publication number: WO 2010/131670

(57) **Abstract**

A method of manufacturing a wire harness is provided according to which an unintended deformation of thermoplastic materials or a separation of the thermoplastic materials are suppressed from being generated. A portion of a wire 91 is mounted on a first holder 1a such that the portion of the wire is disposed between a thermoplastic material 92 and another thermoplastic material 93, the thermoplastic material 92 and the other thermoplastic material 93, that are mounted on the first holder 1a, are pressed by heater-equipped the lower mold 2a and the upper mold 3a, thereby press-forming and heating the thermoplastic material 92 and the other thermoplastic material 93, so that the portion of the wire 91 is covered around with the thermoplastic material 92 and the other thermoplastic material 93 and that mutually contacting surfaces of the thermoplastic material 92 and the other thermoplastic material 93 are welded, and thereafter, the portion of the wire 91 that is covered the thermoplastic material 92 and the other thermoplastic material 93 is removed from the lower mold 2a and the upper mold 3 a while being mounted on an upper side of the first holder 1a.

## Description

### TECHNICAL FIELD

The present invention relates to a method of manufacturing a wire harness, and more particularly, relates to a method of manufacturing a wire harness having a form-keeping member that maintains a portion of a wire of the wire harness in a given shape (the form-keeping member also has a function as a protector that protects the wire of the wire harness).

### BACKGROUND ART

Inside a vehicle such as an automobile, wire harnesses are arranged to connect electric devices or electronic devices to each other. The wire harnesses are arranged along a given path inside the vehicles. Thus, in a manufacturing stage of the wire harness, the wire harness is sometimes formed to have an easy-wiring shape. For example, the wire harness (that is, the wires of the wire harness) may be formed in the shape of path along which the wire harness is arranged.

Accordingly, a form-keeping member is sometimes attached to a certain position on the wires of the wire harness (for example, a position where the wires are split or a position where the wires are bent or curved). Further, a protector is sometimes attached to a certain position to protect the wires of the wire harness. A hollow shell-type member (for example, a cylindrical member with the axial line thereof formed into a given shape) is generally used as the form-keeping member or the protector. Further, a molded product made of resin is generally used as the form-keeping member or the protector.

When the form-keeping member of a molded product is used, the form-keeping member is attached to a certain position on the wires of the wire harness, so that the attached position can be maintained in a given shape. Further, when the protector of a molded product is used, the attached position is protected by the protector. However, when the form-keeping member or the protector of a molded product is used, there are following problems.

First, a mold is needed to manufacture the form-keeping member or the protector. Since the mold is usually expensive, the manufacturing cost or the price of the form-keeping member or the protector increases. Therefore, the prices of the wire harness equipped with the form-keeping member or the protector also increase. Further, since a work for attaching the form-keeping member or the protector on the wires of the wire harness is required, the number of processes increases, so that the manufacturing cost may increase.

Further, when a shell-type form-keeping member or protector is attached on the wires of the wire harness, there may be a gap between the wires and the inner circumferential surface of the form-keeping member or the protector. Therefore, when vibration or impact is applied to the wire harness, the wires may hit against the inner circumferential surface of the form-keeping member or the protector and impact sound may be generated. The generation of rattling or impact sound may detract from the quality of the vehicle equipped with the wire harness. Further, as the wires hit against the inner circumferential surface of the form-keeping member or the protector, the wires may be damaged.

As a configuration of preventing the wires from hitting against the inner circumferential surface of the form-keeping member or the protector, for example, a shock-absorbing material (for example, sponge-like member) may be disposed inside the form-keeping member or the protector. However, in this configuration, a work for arranging the shock-absorbing material inside the form-keeping member or the protector is required, so that the number of processes increases, which may increase the manufacturing cost. Further, since the number of parts also increases, component cost may increase.

As a configuration using a protector that is not a molded product, for example, a configuration that forms a protector made of a thermoplastic material around a flat circuit unit has been proposed (see Patent Document 1). That is, according to the configuration disclosed in Patent Document 1, a flat circuit unit is disposed between two sheets of coating materials made of thermoplastic resin, and the materials are press-formed by molds and heated, so that two sheets of coating materials adhere to the flat circuit unit and the contacting portions of the two sheets of coating materials are welded. According to this configuration, since the two sheets of coating materials become a protector, a protector of a molded product is not needed. Therefore, it is possible to reduce the component cost.

However, the configuration disclosed in Patent Document 1 is considered to have the following problems. Since the coating materials are in a high temperature right after the press forming, the coating materials may easily be plastically deformed. Therefore, when the press-formed wire harness is taken out from the mold and conveyed, the wire harness may be bent by the weight of the flat circuit unit or the coating materials. Further, when the coating materials is touched while taking out from the mold or being conveyed, the touched portion or the portion near the touched portion may be deformed. As described above, undesired deformation may be generated in the wire harness after the press forming.

Further, when the coating materials are taken out from the mold after the press forming, the compression force having been exerted to the coating materials is removed, so that the coating materials may deform back to the initial shape (a phenomenon similar to a spring back in plastic forming of metal or the like may occur). Further, when the coating materials are taken out from the mold before being fully hardened, the compression force having been exerted to the contacting surfaces of the coating materials is released, so that welding strength of the coating materials decreases and the welded portion may separate.

Patent Document 1 discloses the taking out of the wire harness after cooling the mold. However, according to this configuration, it is necessary to heat and cool the mold each time the wire harness is press-formed. Therefore, it takes long time to manufacture the wire harness.

Moreover, Patent Document 1 discloses the configuration in which a recessed portion is formed in the mold and the flat circuit unit is inserted in the recessed portion when press-forming the coating materials in the mold. According to this configuration, since it is possible to prevent a compression force from being applied to the flat circuit unit, it is possible to prevent damage to the flat circuit unit. However, since the press forming is performed with the flat circuit unit being disposed between the two sheets of coating materials, it is difficult to accurately position the flat circuit unit and it is also difficult to accurately guide the flat circuit unit into the recessed portion of the mold. Further, even though it is possible to accurately position the flat circuit unit before the press forming, the flat circuit unit may move thereafter and may separate from the recessed portion of the mold during the press forming.

Further, the conventional protector may break, when trying to change the shape of the protector by bending or the like after the forming or cooling. Further, sometimes, the shape cannot be changed after the cooling, as the rigidity increases.

Patent Document 1: JP 2003-197038 A

### SUMMARY OF THE INVENTION

### PROBLEM TO BE SOLVED BY THE INVENTION

The present invention has been made in view of the circumstances described above, and a problem to be solved by the present invention is to provide a method of manufacturing a wire harness having a form-keeping member maintaining a wire or a bundle of wires in a given shape or a protector protecting the wire or the bundle of wires, without using a form-keeping member or a protector of a molded product, a method of manufacturing a wire harness that makes it possible to reduce the manufacturing cost or the number of manufacturing processes of a form-keeping member or a protector, a method of manufacturing a wire harness having a form-keeping member or a protector, which is made of a thermoplastic material, which can prevent unintended deformation or separation of the thermoplastic materials from being occurred, a method of manufacturing a wire harness having a form-keeping member or a protector, which is made of a thermoplastic material, that makes it possible to reduce the time required for the manufacturing, a method of manufacturing a wire harness having a form-keeping member or a protector, which is made of a thermoplastic material, that makes it possible to accommodate a wire or a bundle of wires in a given position, or a method of manufacturing a wire harness having a form-keeping member or a protector, which is made of a thermoplastic material, that makes it possible to change the shape even after molding the form-keeping member or the protector.

### MEANS FOR SOLVNG THE PROBLEM

To solve the problem described above, the present invention provides a method of manufacturing a wire harness having a portion of a wire covered around with thermoplastic materials. The method includes mounting the portion of the wire and the thermoplastic materials on an upper side of a first holder such that the portion of the wire is disposed between the thermoplastic materials, pressing a lower side of the first holder by one of a heater-equipped pair of molds and pressing the thermoplastic materials, that are mounted on the first holder and between which the portion of the wire is disposed, by the other of the pair of molds, thereby press-forming and heating, to a given temperature, the thermoplastic materials that are mounted on the upper side of the first holder and between which the portion of the wire is disposed, so that the portion of the wire is covered around with the thermoplastic materials and that mutually contacting surfaces of the thermoplastic materials are welded, and thereafter removing the portion of the wire that is covered with the thermoplastic materials from the pair of molds, with the portion of the wire that is covered with the thermoplastic materials mounted on the upper side of the first holder.

It is preferable that, after removing the portion of the wire that is covered with the thermoplastic materials from the pair of molds with the portion of the wire that is covered with the thermoplastic materials mounted on the upper side of the first holder, the thermoplastic materials be cooled, with the portion of the wire that is covered with the thermoplastic materials mounted on the upper side of the first holder.

It is preferable that at least one of said other of the pair of molds and the upper side of the first holder be formed with a recessed portion configured to accommodate the portion of the wire and a pressing portion be formed outside the recessed portion to apply a compression force to the mutually contacting surface of the thermoplastic materials, so that portions of the contacting surfaces of the thermoplastic materials where the compression force is applied by the pressing portion are welded.

The present invention provides a method of manufacturing a wire harness having a portion of a wire covered with thermoplastic materials. The method includes placing the portion of the wire and the thermoplastic materials between an upper side of a first holder and a lower side of a second holder such that the portion of the wire is disposed between the thermoplastic materials, pressing a lower side of the first holder by one of a heater-equipped pair of molds and pressing an upper side of the second holder by the other of the pair of molds, thereby press-forming and heating, to a given temperature, the thermoplastic materials that are held between the first holder and the second holder and between which the portion of the wire is disposed, so that the portion of the wire is covered around with the thermoplastic materials and that mutually contacting surfaces of the thermoplastic materials are welded, and thereafter removing the portion of the wire that is covered with the thermoplastic materials from the pair of molds, with the portion of the wire that is covered with the thermoplastic materials held between the first holder and the second holder.

It is preferable that, after removing the portion of the wire that is covered with the thermoplastic materials from the pair of molds with the portion of the wire that is covered with the thermoplastic materials held between the first holder and the second holder, the thermoplastic materials be cooled, with the portion of the wire that is covered with the thermoplastic materials held between the first holder and the second holder.

It is preferable that at least one of the upper side of the first holder and the lower side of the second holder be formed with a recessed portion configured to accommodate the portion of the wire and a pressing portion be formed outside the recessed portion to apply a compression force to the mutually contacting surface of the thermoplastic materials, so that portions of the contacting surfaces of the thermoplastic materials where the compression force is applied by the pressing portion are welded.

A surface portion of a portion of the thermoplastic materials that is fitted in the recessed portion may be plastically deformed by heating the surface portion to the given temperature and be hardened, so that a hardness thereof is higher as compared with a central portion of the portion of the thermoplastic materials that is fitted in the recessed portion.

Guide pins may be provided to protrude from the first holder to position the wire in the recessed portion, so that the portion of the wire is positioned by the guide pins protruding through and out of the thermoplastic materials. Guide pins may be provided to protrude from the mold, and the first holder may be formed with through-holes in which the guide pins are inserted, so that the wire is positioned by the guide pins protruding through the through-holes.

The pair of molds is formed with shearing step-surfaces configured to cut off unnecessary portions of the thermoplastic materials, so that the unnecessary portions of the thermoplastic materials are cut off when press-forming the thermoplastic materials between which the portion of the wire is disposed.

A reinforcing thermoplastic material may be disposed between the thermoplastic materials together with the portion of the wire, whereby the reinforcing thermoplastic material is also press-formed when press-forming and heating, to the given temperature, the thermoplastic materials between which the portion of the wire is disposed, so that the portion of the wire is covered around with the thermoplastic materials and that contacting surfaces of the reinforcing thermoplastic material and the thermoplastic materials are welded.

A pressing protrusion may be provided to protrude from at least one of the pair of molds to presses the thermoplastic materials, so that, when press-forming the thermoplastic materials between which the portion of the wire is disposed, the pressing protrusion bites into the thermoplastic materials, thereby pushing one of the mutually contacting surfaces of the thermoplastic materials, between which the portion of the wire is disposed, into the other of the mutually contacting surfaces.

Before press-forming the thermoplastic materials between which the portion of the wire is disposed, an attachment reinforcing member may be fixed on the portion of the wire to improve an attachment strength between the wire and the thermoplastic materials.

Before press-forming the thermoplastic materials between which the portion of the wire is disposed, a shield member having an extending portion may be attached to an outer circumference of the portion of the wire, so that the thermoplastic materials are press-formed with the extending portion of the shield member held between the thermoplastic materials, and a fastener is attached to the thermoplastic materials such that the fastener is electrically coupled to the extending portion of the shield member.

After removing the portion of the wire that is covered with the thermoplastic materials from the pair of molds, the portion of the wire that is covered with the thermoplastic materials may be heated while pressing and bending the portion of the wire, so that the portion of the wire that is covered with the thermoplastic materials is bent into a given shape. After removing the portion of the wire that is covered with the thermoplastic materials from the pair of molds, and before the thermoplastic materials are cooled to a temperature where the thermoplastic materials are not softened, the portion of the wire that is covered with the thermoplastic materials is pressed to bend the portion of the wire, so that the portion of the wire that is covered with the thermoplastic materials is bent into a given shape.

### ADVANTAGES OF THE INVENTION

According to the present invention, it is possible to form a form-keeping member that keeps the wire harness in a given shape by press-forming the thermoplastic materials. Further, the form-keeping member also has a function as a protector that protects the wire of the wire harness. Therefore, it is possible to form the form-keeping member or the protector in the wire harness without using a form-keeping member or a protector of a molded product.

The form-keeping member made of a thermoplastic material is formed by heating and press-forming the thermoplastic materials. Since it is possible to use an inexpensive material for the thermoplastic material, as compared with a form-keeping member or a protector of a molded product, it is possible to reduce the manufacturing cost of the form-keeping member or the component cost. Further, since the mold for press-forming the thermoplastic material has a simple structure and is inexpensive in comparison to a mold for manufacturing a molded product, it is possible to prevent an increase in equipment cost or reduce the equipment cost.

Further, the form-keeping member may be formed only by disposing a portion of the wire of the wire harness between the thermoplastic materials and press-forming in that state. Therefore, the work is simplified as compared with the configuration of attaching a form-keeping member or a protector of a molded product. Accordingly, it is possible to reduce the manufacturing time or the manufacturing cost of the wire harness.

According to the present invention, it is possible to firmly weld thermoplastic materials at their given portions (the portions where a wire is not embedded) of the thermoplastic materials by compressing the given portions. Therefore, it is possible to form a form-keeping member with the thermoplastic materials being strongly bonded together.

Further, according to the present invention, it is possible to finish press-forming of a thermoplastic material before a portion of the thermoplastic material which is in contact with the wire and a portion near the contact portion reaches a high temperature. Therefore, the properties before the press forming can be kept at the portion of the form-keeping member, that has been formed, that is in contact with the wire and the portion adjacent thereto. Accordingly, it is possible to manufacture a wire harness having a configuration in which the wire is elastically covered by a non-hardened thermoplastic material. According to the wire harness having this configuration, the non-hardened thermoplastic material functions as a shock-absorbing material that protects the wire from vibration or impact. Further, since the wire is covered by the non-hardened thermoplastic material, rattling or impact sound is not generated between the wire and the form-keeping member even if vibration or impact is applied to the wire harness. As described above, it is possible to achieve similar effect as that of a configuration in which a form-keeping member or a protector of a molded product is filled with a shock-absorbing material therein. Meanwhile, it is possible to reduce the number of parts or the number of work processes, as compared with the configuration in which a form-keeping member or a protector of a molded product is filled with a shock-absorbing material.

According to the present invention, it is possible to prevent unintended deformation when taking out the manufactured wire harness from a mold or cooling the wire harness that has been taken out. That is, according to the present invention, the manufactured wire harness may be taken out from the mold in the state where the manufactured wire harness is disposed at a first holder. Further, the wire harness taken out from the mold may be cooled in the state where the wire harness is disposed at the first holder. Therefore, it is not necessary to directly touch the wire harness when taking out the wire harness from the mold or cooling the wire harness. Further, when the wire harness is disposed at the first holder, the shape of the wire harness formed by the mold is maintained. Therefore, it is possible to prevent unintended (or undesired) deformation of the wire harness from occurring.

Further, according to the present invention, it is possible to prevent separation between the thermoplastic materials by interposing the wire harness formed by the mold between the first holder and a second holder, and it is possible to improve the welding strength of the thermoplastic materials. In addition, it is possible to improve the dimensional accuracy of the cross-section of the wire harness.

That is, after the press-forming by the mold, and until the temperature of the thermoplastic materials drops down to the temperature where plastic deformation is difficult, a compression force to the thermoplastic materials can be applied by interposing the wire harness between the first holder and the second holder and maintaining the wire harness with a clamp. Therefore, it is possible to apply a pressing force to the contacting surfaces of the thermoplastic materials, prevent separation between the thermoplastic materials, and improve the welding strength. Further, right after being formed by the mold, the thermoplastic materials are in a high-temperature and are easily plastically deformable. When the compression force applied to the thermoplastic materials is removed in this state, the thermoplastic materials intend to return to the initial shape. Therefore, it is possible to prevent a change in the cross-sectional shape and improve the dimensional accuracy of the thermoplastic materials of the wire harness by keeping the wire harness interposed between the first holder and the second holder until the temperature of the thermoplastic materials drops down to the temperature where the thermoplastic materials do not deform.

According to the present invention, it is possible to position the wire at a given position with a guide pin. Therefore, it is possible to prevent the wire or the bundle of wires from being damaged by pressing, in the press-forming.

According to the present invention, it is possible to form (bend) the portion of the wire harness into a given shape even after press-forming the thermoplastic materials. Therefore, it becomes easy to form the wire harness or change the shape thereof. Further, it is not necessary to reheat the wire harness by bending the wire harness before the temperature of the thermoplastic materials drops down to the temperature where the thermoplastic materials do not soften.

### BRIEF DESCRIPTION OF THE DRAWINGS

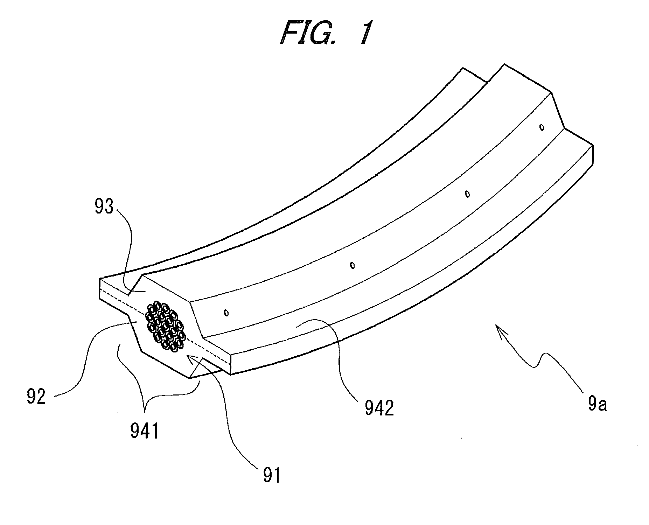

FIG 1 is an external perspective view schematically showing a configuration of a wire harness (a first wire harness) manufactured by a wire harness manufacturing method according to a first embodiment of the present invention;

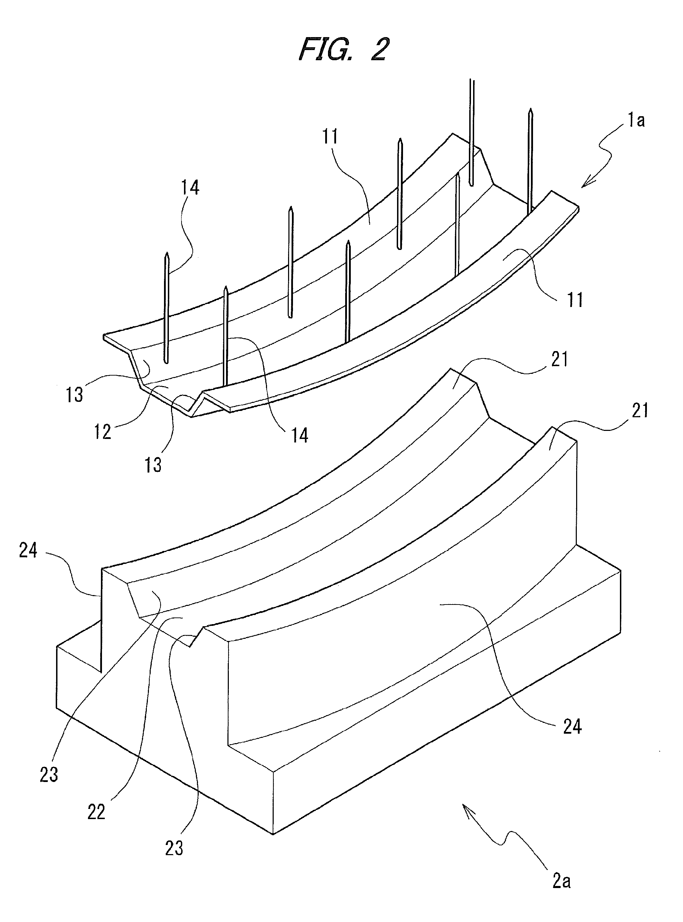

FIG 2 is an external perspective view schematically showing a configuration of an equipment used in the wire harness manufacturing method according to the first embodiment of the present invention, and more specifically, an external perspective view schematically showing a configuration of a first holder and a lower mold;

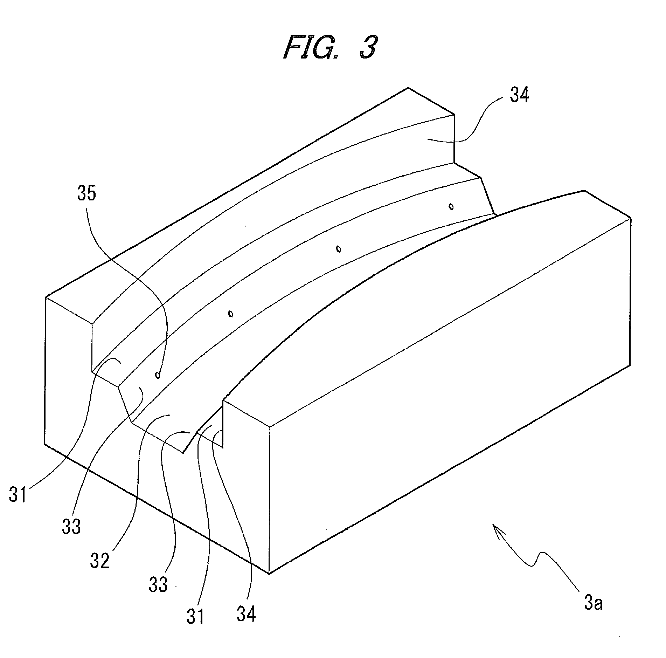

FIG. 3 is an external perspective view schematically showing a configuration of an equipment used in the wire harness manufacturing method according to the first embodiment of the present invention, and more specifically, an external perspective view schematically showing a configuration of an upper mold;

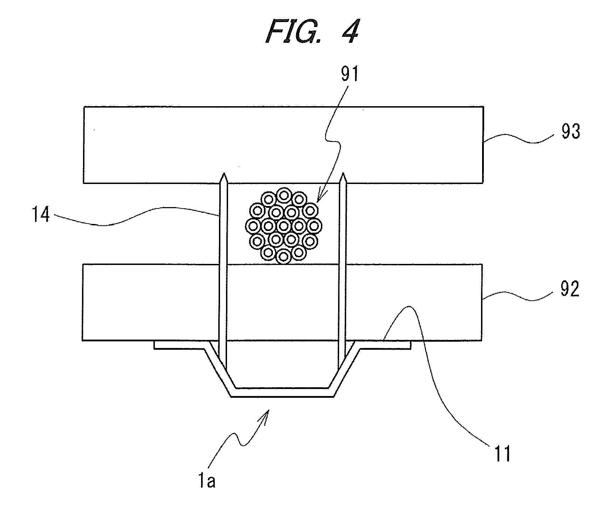

FIG. 4 is a sectional view schematically showing a process of the wire harness manufacturing method according to the first embodiment of the present invention, and more specifically, a sectional view schematically showing when a thermoplastic material, wires, and another thermoplastic material are mounted on the first holder;

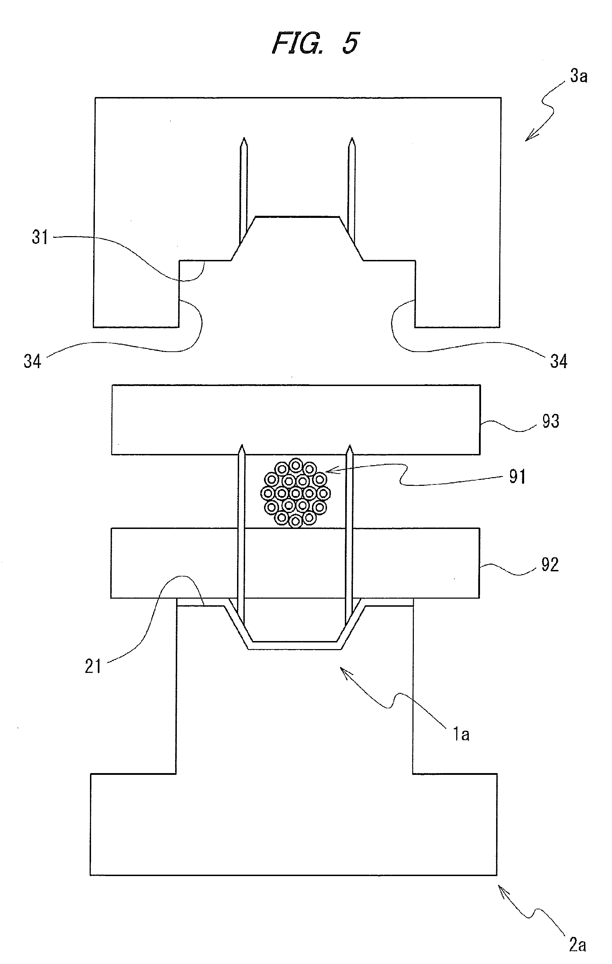

FIG 5 is a sectional view schematically showing a process of the wire harness manufacturing method according to the first embodiment of the present invention, and more specifically, a sectional view schematically showing when the first holder on which the thermoplastic material, the wires, and the other thermoplastic material are mounted is placed on the lower mold;

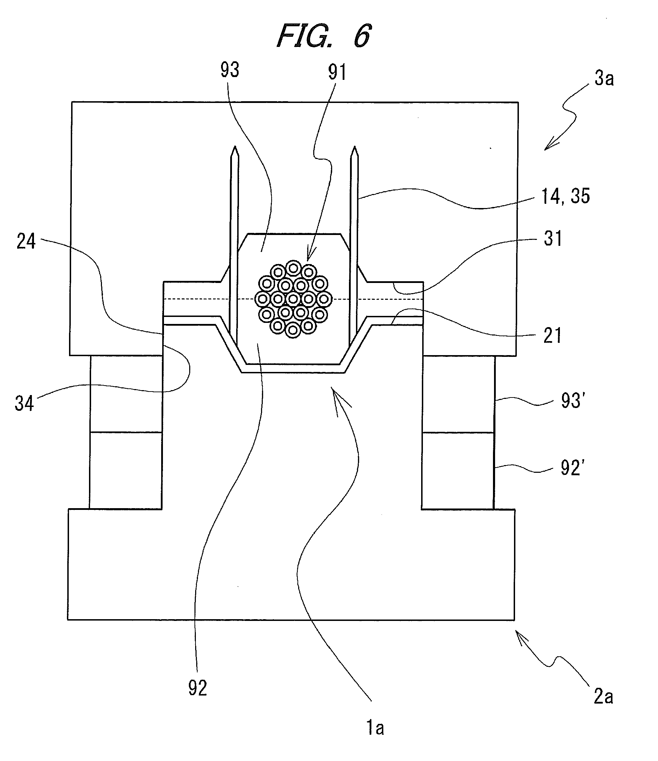

FIG 6 is a sectional view schematically showing a process of the wire harness manufacturing method according to the first embodiment of the present invention, and more specifically, a sectional view schematically showing when the thermoplastic material and the other thermoplastic material are pressed by the upper mold and the lower mold;

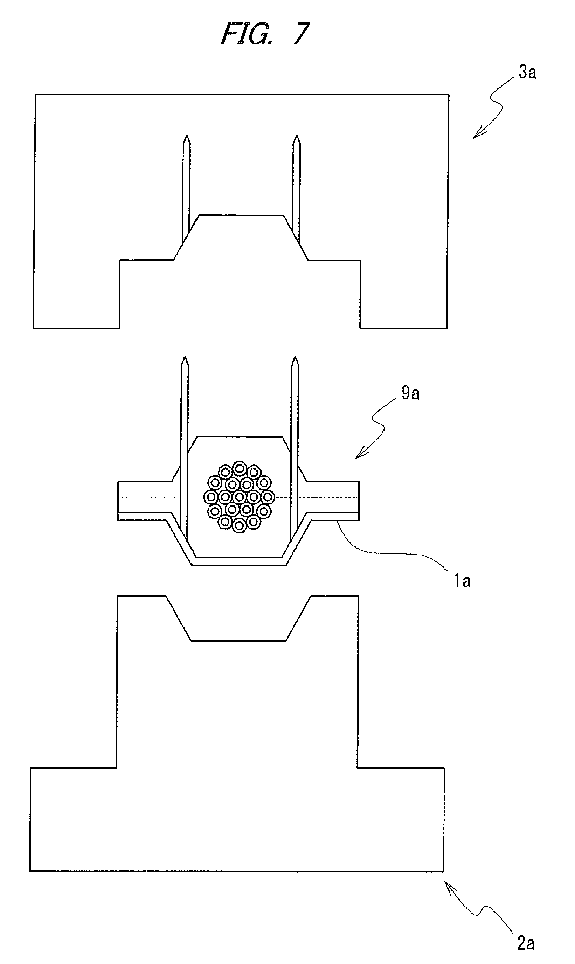

FIG 7 is a sectional view schematically showing a process of the wire harness manufacturing method according to the first embodiment of the present invention, and more specifically, a sectional view schematically showing when a manufactured wire harness according to the first embodiment of the present invention is taken out from the upper mold and the lower mold while being mounted on the first holder;

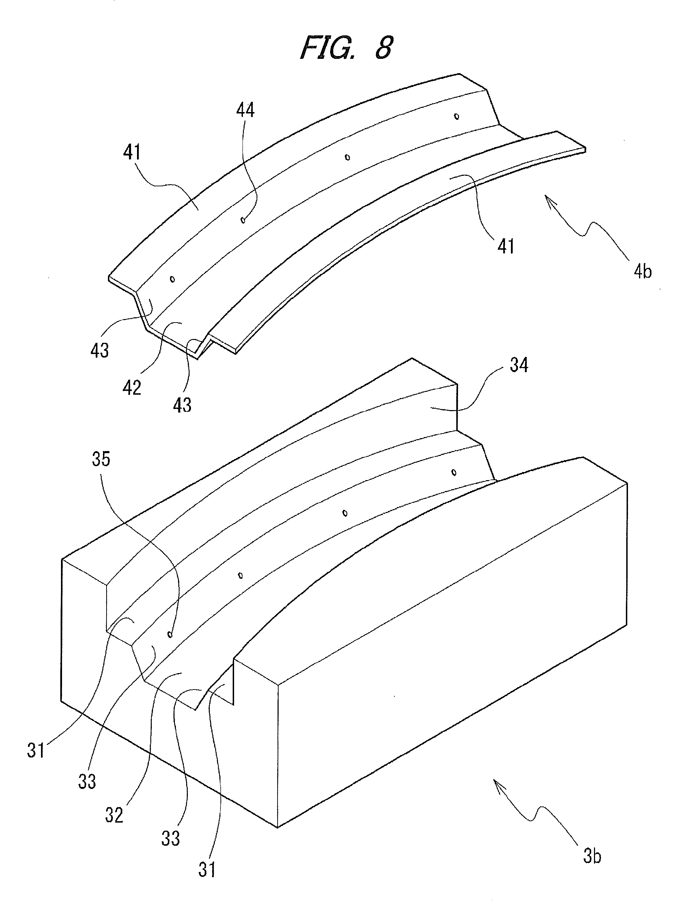

FIG. 8 is an external perspective view schematically showing the configuration of an equipment used in a wire harness manufacturing method according to a second embodiment of the present invention, and more specifically, an external perspective view schematically showing a configuration of a second holder and the upper mold;

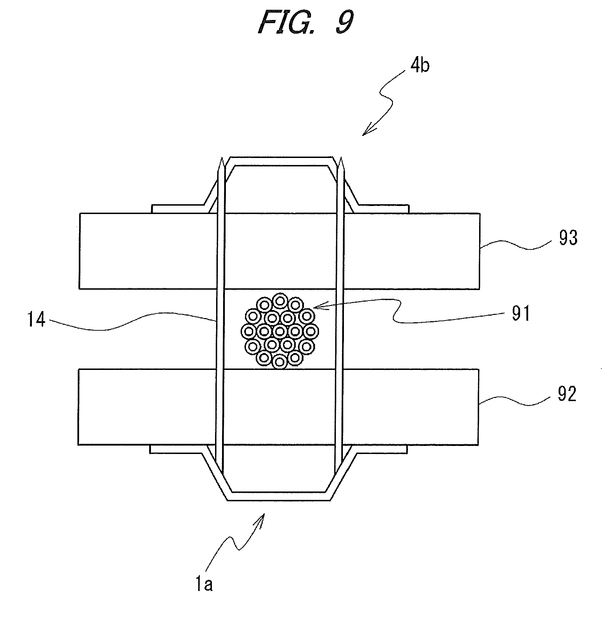

FIG. 9 is a sectional view schematically showing a process of the wire harness manufacturing method according to the second embodiment of the present invention, and more specifically, a sectional view schematically showing when a thermoplastic material, wires, and another thermoplastic material are disposed in between a first holder and the second holder;

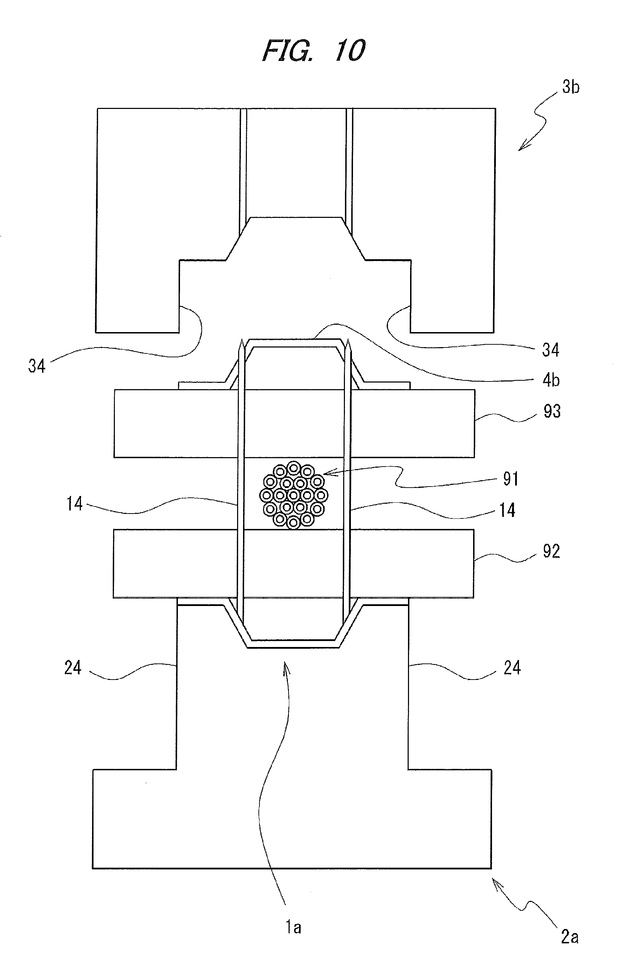

FIG. 10 is a sectional view schematically showing a process of the wire harness manufacturing method according to the second embodiment of the present invention, and more specifically, a sectional view schematically showing when the first holder and the second holder, between which the thermoplastic material, the wires, and the other thermoplastic material are disposed, are placed on the lower mold;

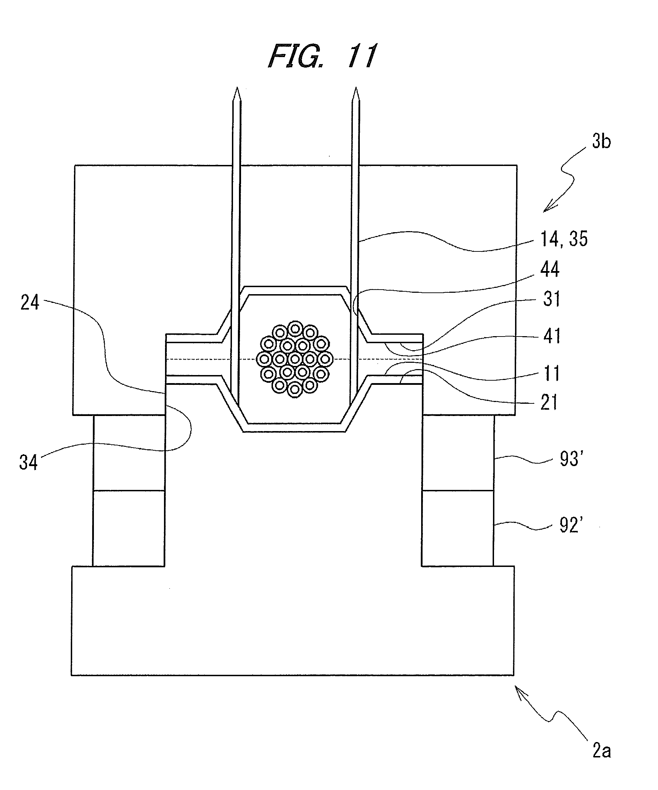

FIG. 11 is a sectional view schematically showing a process of the wire harness manufacturing method according to the second embodiment of the present invention, and more specifically, a sectional view schematically showing when the thermoplastic material and the other thermoplastic material are pressed by the upper mold and the lower mold;

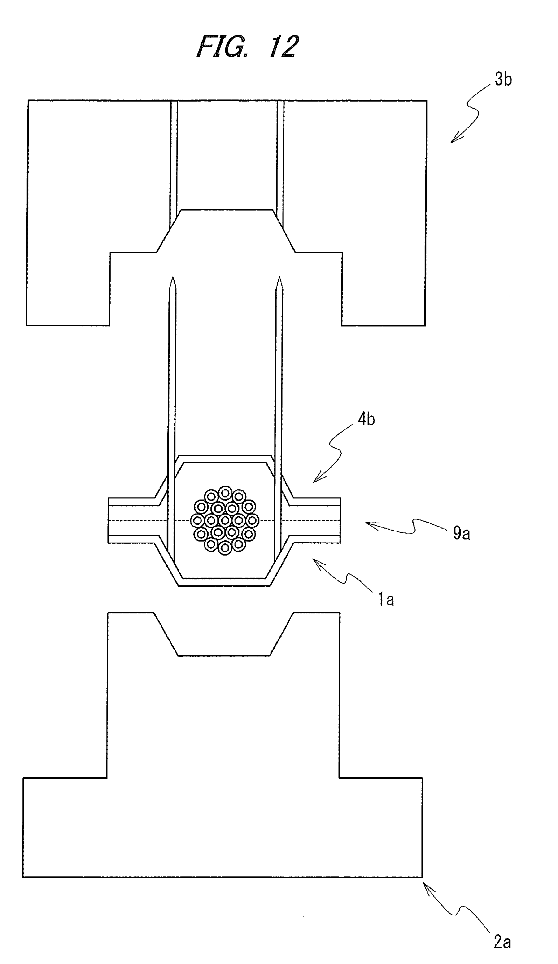

FIG. 12 is a sectional view schematically showing a process of the wire harness manufacturing method according to the second embodiment of the present invention, and more specifically, a sectional view schematically showing when a manufactured first wire harness is taken out from the upper mold and the lower mold while being held between the first holder and the second holder;

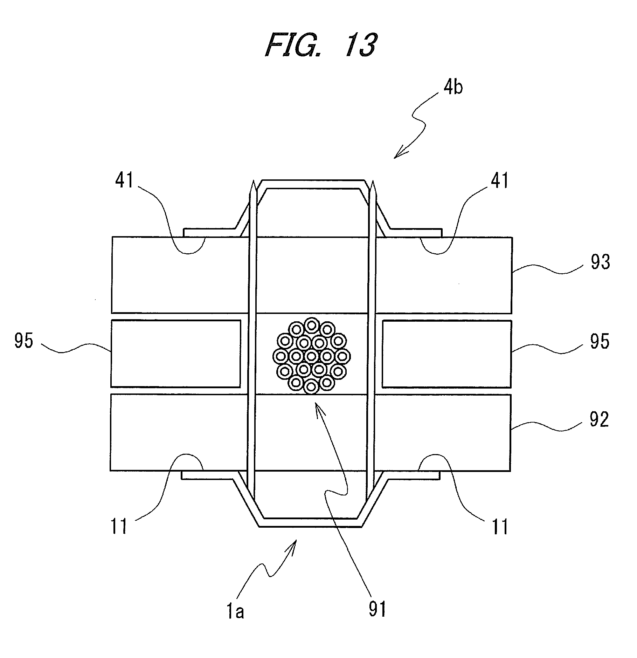

FIG. 13 is a sectional view schematically showing a process of a wire harness manufacturing method according to a third embodiment of the present invention, and more specifically, a sectional view schematically showing when a thermoplastic material, wires, another thermoplastic material, and a reinforcing thermoplastic material are arranged between a first holder and a second holder;

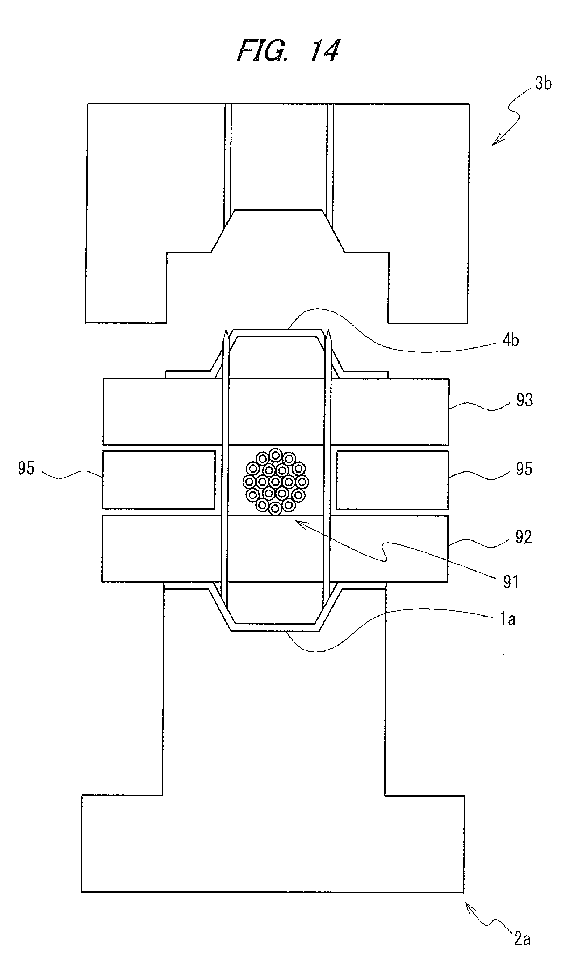

FIG. 14 is a sectional view schematically showing a process of the wire harness manufacturing method according to the third embodiment of the present invention, and more specifically, a sectional view schematically showing when the first holder and the second holder between which the thermoplastic material, the wires, the other thermoplastic material, and the reinforcing thermoplastic material are disposed, are placed on a lower mold;

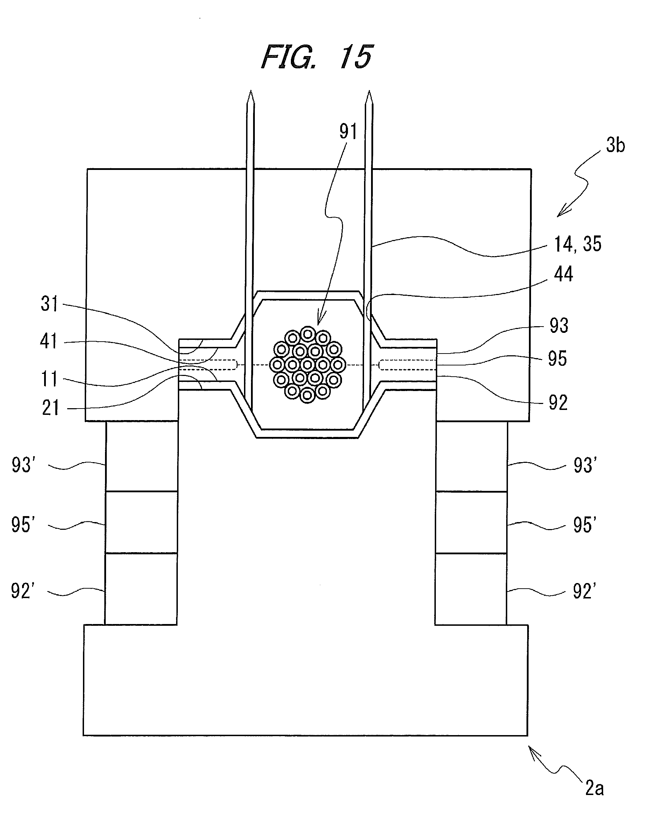

FIG. 15 is a sectional view schematically showing a process of the wire harness manufacturing method according to the third embodiment of the present invention, and more specifically, a sectional view schematically showing when the thermoplastic material, the wires, the other thermoplastic material, and the reinforcing thermoplastic material are pressed by an upper mold and the lower mold;

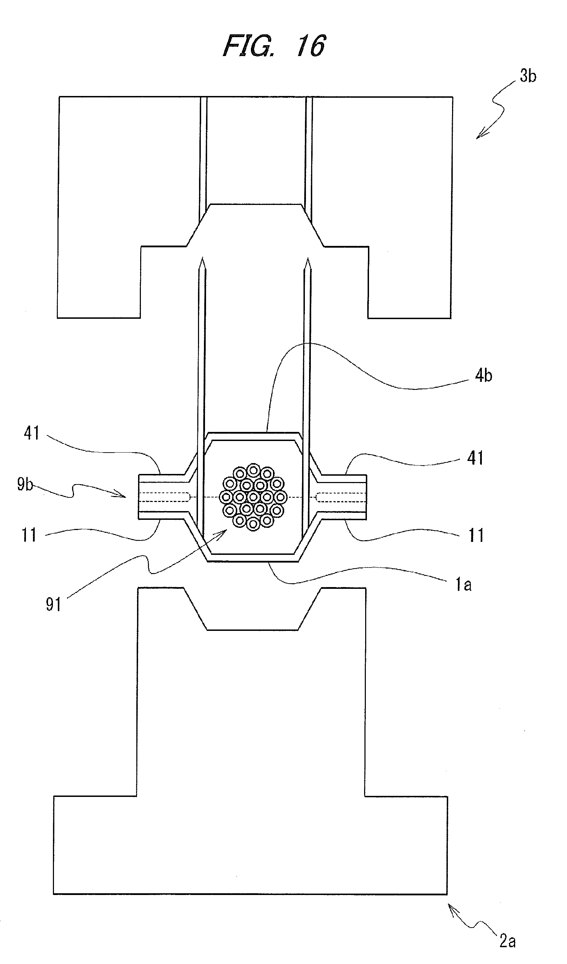

FIG. 16 is a sectional view schematically showing a process of the wire harness manufacturing method according to the third embodiment of the present invention, and more specifically, a sectional view schematically showing when a manufactured second wire harness of the present invention is taken out from the upper mold and the lower mold while being held between the first holder and the second holder;

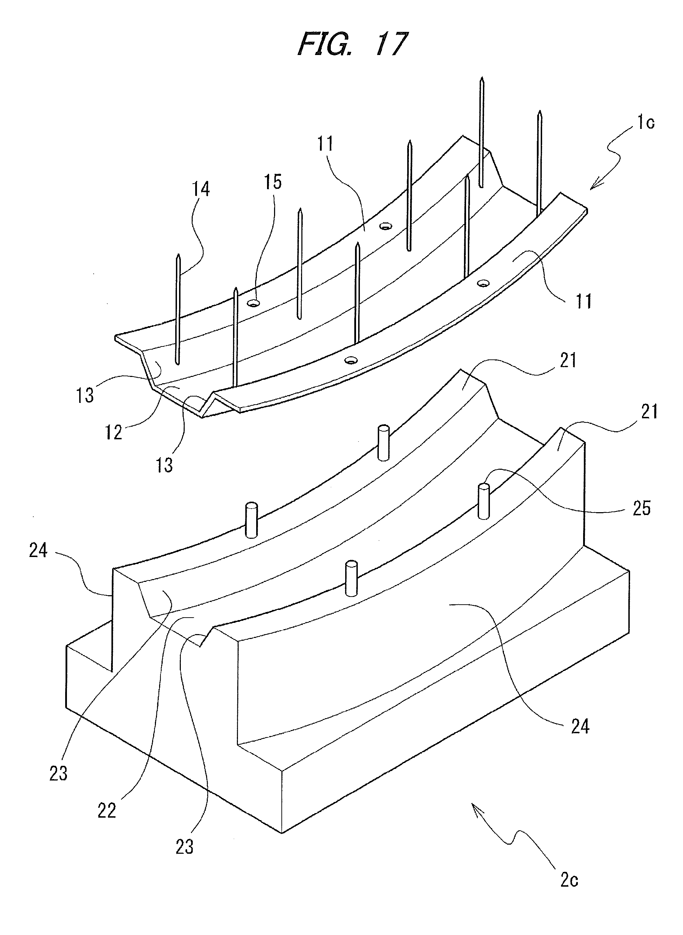

FIG 17 is an external perspective view schematically showing a configuration of an equipment used in the wire harness manufacturing method according to a fourth embodiment of the present invention, and more specifically, an external perspective view schematically showing a configuration of a first holder and a lower mold;

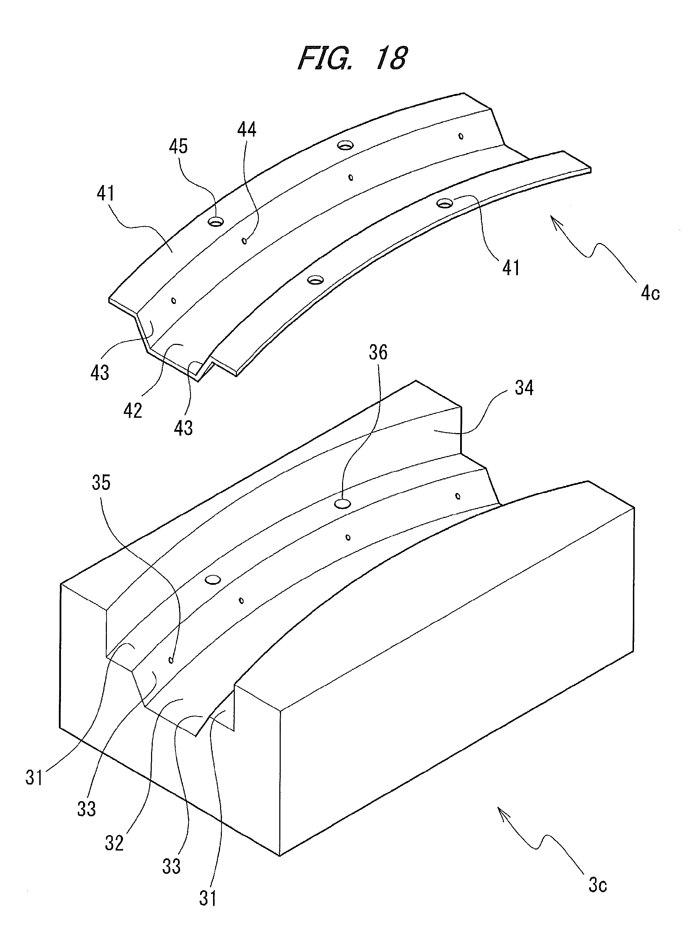

FIG. 18 is an external perspective view schematically showing a configuration of an equipment used in the wire harness manufacturing method according to the fourth embodiment of the present invention, and more specifically, an external perspective view schematically showing a configuration of a second holder and an upper mold;

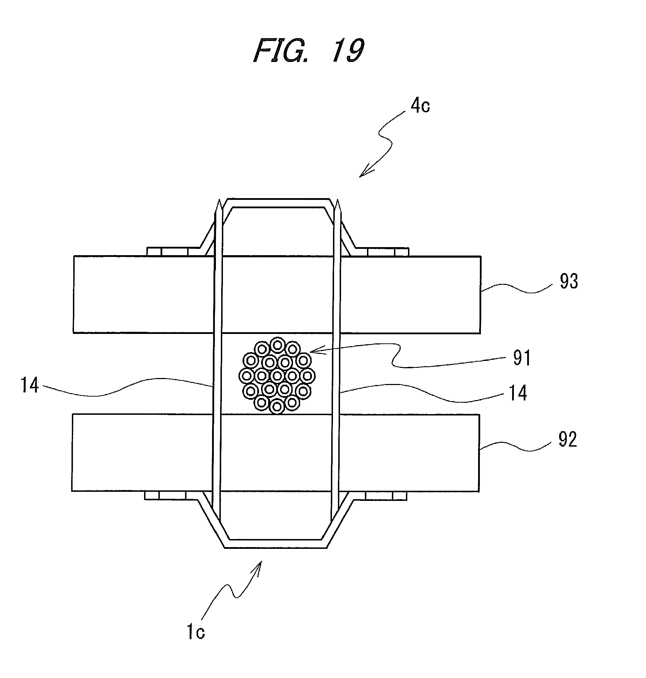

FIG. 19 is a sectional view schematically showing a process of the wire harness manufacturing method according to the fourth embodiment of the present invention, and more specifically, a sectional view schematically showing when the first holder and the second holder between which a thermoplastic material, wires, and another thermoplastic material are disposed, are placed on the lower mold;

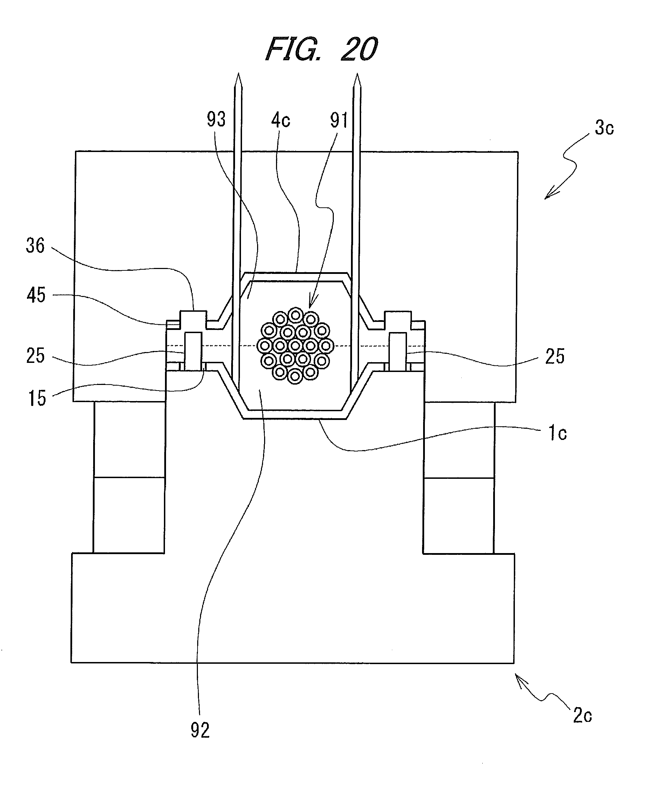

FIG. 20 is a sectional view schematically showing a process of the wire harness manufacturing method according to the fourth embodiment of the present invention, and more specifically, a sectional view schematically showing when the thermoplastic material, the wires, and the other thermoplastic material are pressed by the upper mold and the lower mold;

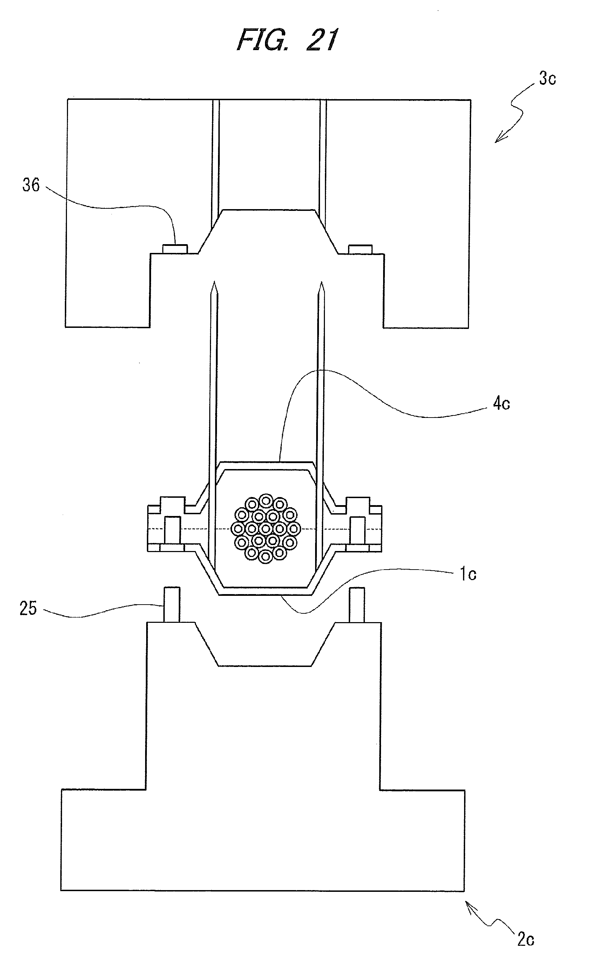

FIG 21 is a sectional view schematically showing a process of the wire harness manufacturing method according to the fourth embodiment of the present invention, and more specifically, a sectional view schematically showing when a manufactured third wire harness is taken out from the upper mold and the lower mold while being held between the first holder and the second holder;

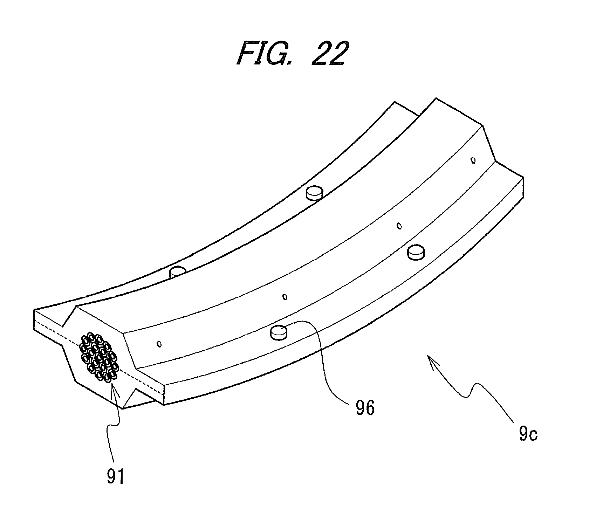

FIG. 22 is an external perspective view schematically showing the configuration of a wire harness (a third wire harness) manufactured by the wire harness manufacturing method according to the fourth embodiment of the present invention;

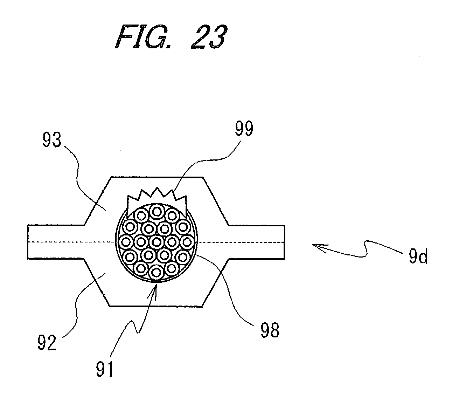

FIG 23 is a sectional view schematically showing a cross-sectional structure of a wire harness in which a connecting strength between one or both of thermoplastic materials and the wires is improved;

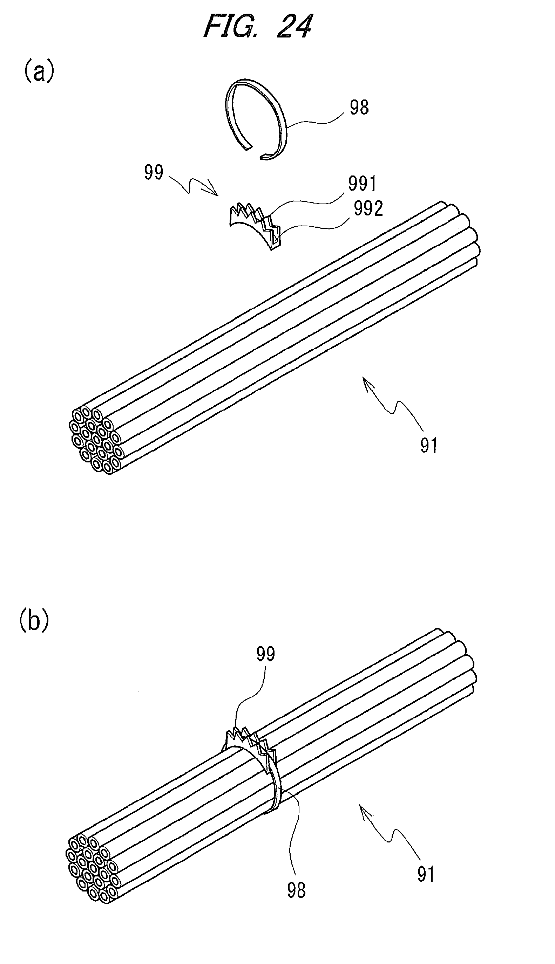

FIG 24 is a view schematically showing components of the wire harness in which the connecting strength between one or both of the thermoplastic materials and the wires is improved, in which (a) is an exploded perspective view schematically showing the configuration of the wire, a strength-improving member, and a fastener and (b) is an external perspective view schematically showing when the strength-improving member is fixed to the wires by the fastener;

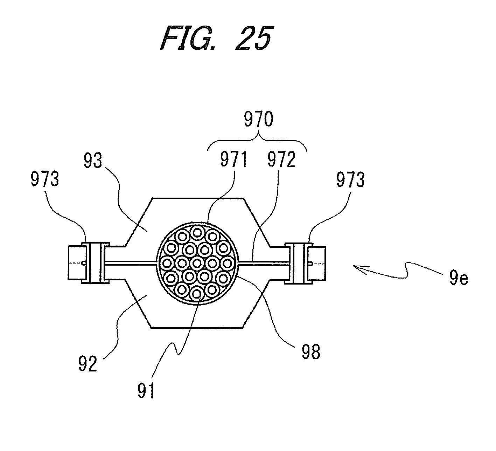

FIG. 25 is a sectional view schematically showing a configuration of a wire harness having wires coated with a shield member;

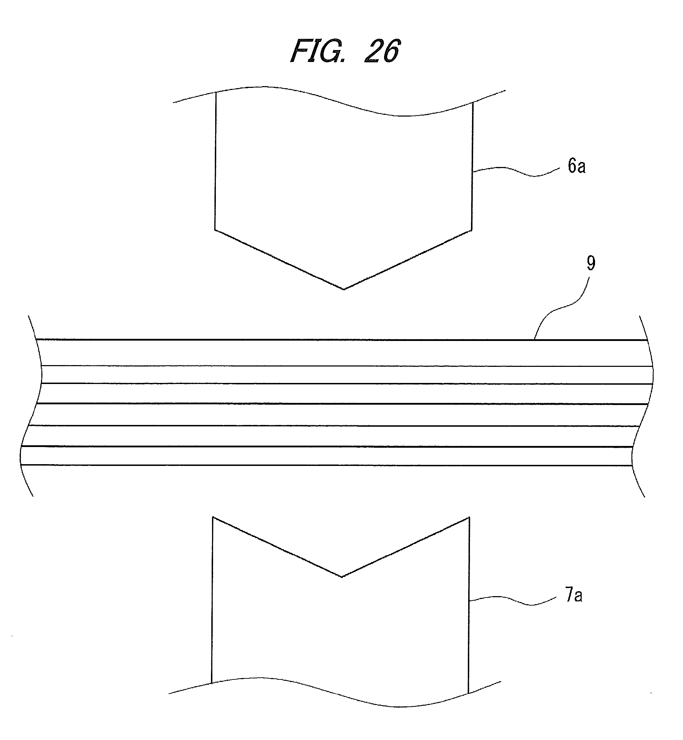

FIG. 26 is a sectional view schematically showing a process of bending the wire harness according to any one of the embodiments of the present invention, and more specifically, a sectional view schematically showing before bending;

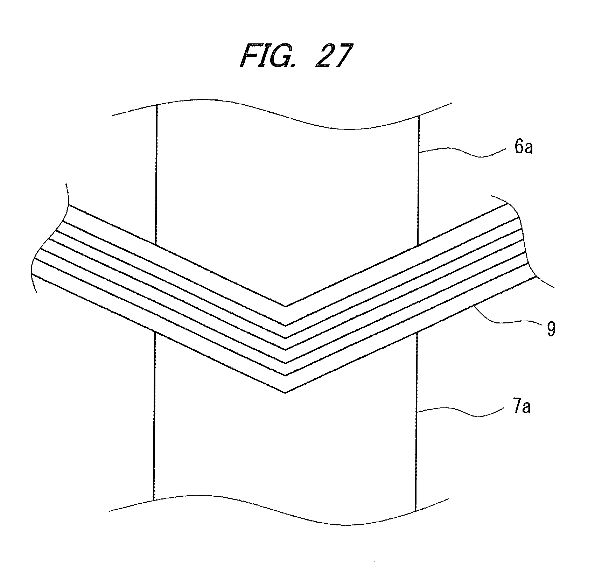

FIG. 27 is a sectional view schematically showing a process of bending the wire harness according to any one of the embodiments of the present invention, and more specifically, a sectional view schematically showing when bending is performed by an upper mold for bending and a lower mold for bending, having the wire harness according to any one of the embodiments of the present invention disposed therebetween;

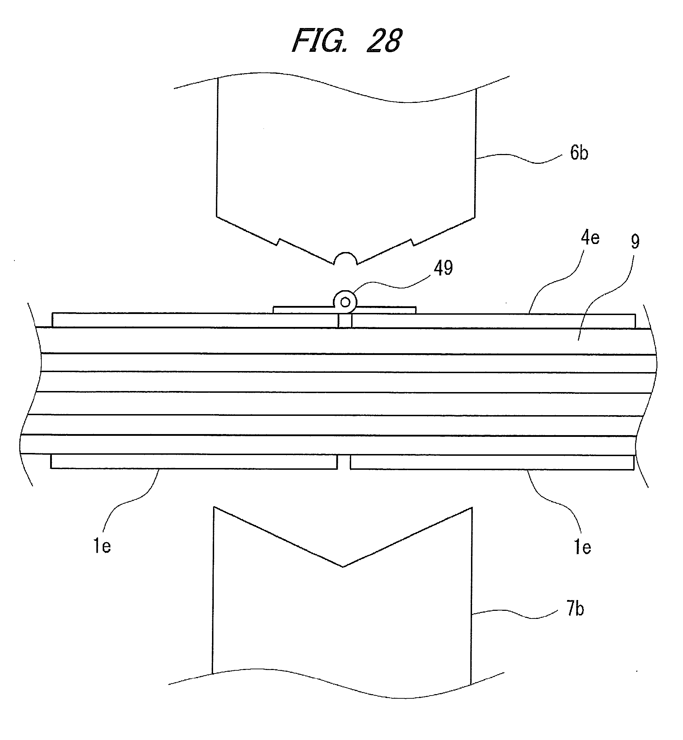

FIG. 28 is a sectional view schematically showing a process of bending a portion of a wire harness, and more specifically, a sectional view schematically showing before bending with the portion of the wire harness held between the first holder and the second holder; and

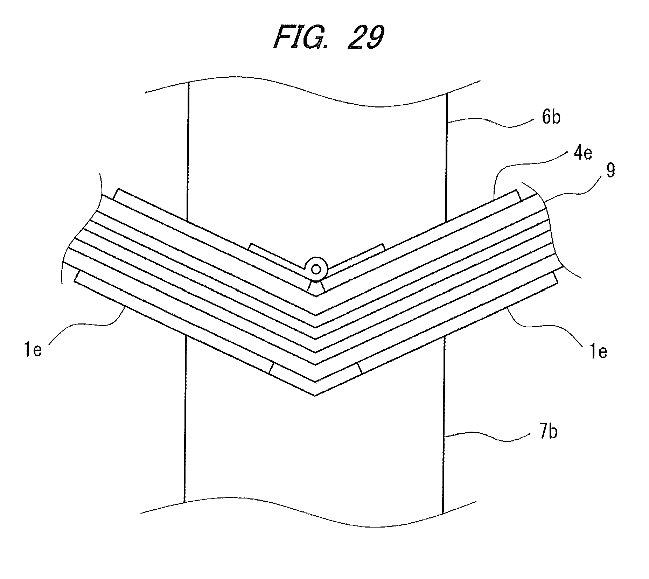

FIG. 29 is a sectional view schematically showing a process of bending a portion of a wire harness, and more specifically, a sectional view schematically showing bending is performed by the upper mold for bending and the lower mold for bending, having the portion of the wire harness disposed therebetween, with the portion of the wire harness held between the first holder and the second holder.

### EMBODIMENTS OF THE INVENTION

Hereinafter, various embodiments of the present invention will be described in detail with reference to the drawings.

FIG. 1 is an external perspective view schematically showing the configuration of a portion (a part) of a wire harness 9a (hereafter, referred to as a 'the first wire harness 9a' for the convenience of description) manufactured by a method of manufacturing a wire harness according to a first embodiment of the present invention or a method of manufacturing a wire harness according to a second embodiment of the present invention.

The entire first wire harness 9a is formed in a given shape by binding a given number of wires. Further, connector-like members (not shown) are mounted at the ends of the wires. As shown in FIG 1, a portion of the first wire harness 9a includes a given number of wires 91 (a wire or a plurality of wires, for a plurality of wires, the wires are bundled, in the present invention, a "wire" includes a bundle of wires composed of a plurality of wires, as well as a single wire) and thermoplastic materials 92 and 93 covering the wires. Further, the portion around the portion of the wire 91 is covered by two thermoplastic materials 92 and 93 (hereafter, for the convenience of description, two thermoplastic materials 92 and 93 will be referred to as "the thermoplastic material 92" and "the other thermoplastic material 93", respectively).

Further, the thermoplastic material 92 and the other thermoplastic material 93 that cover the portion around the portion of the wire 91 become a form-keeping member that maintains the portion of the wire 91 in a given shape. Further, the thermoplastic material 92 and the other thermoplastic material 93 (that is, the form-keeping member) also have a function as a protector that protects the portion of the wire 91.

The thermoplastic material 92 and the other thermoplastic material 93 of the first wire harness 9a are formed of non-woven fabric or foam which is made of a certain material. The non-woven fabric or the foam has thermoplasticity. That is, deformation applied in a state heated at a given temperature or more is usually plastic deformation and deformation applied at a temperature lower than the given temperature is usually elastic deformation. Further, the materials are formed in a given shape in the state heated at the given temperature or more, and then, when the temperature drops lower than the given temperature, the formed shape is maintained.

The non-woven fabric may have a configuration in which basic fibers and binder fibers are woven. The basic fibers are made of a thermoplastic resin material having a certain melting point. The binder fibers have a configuration in which a binder material layer is formed at the outside of a core fiber. The core fiber is made of the same thermoplastic resin material as the basic fibers. The binder material layer is made of a thermoplastic resin material having a melting point lower than the basic fibers and the core fiber. When the non-woven fabric having the configuration is heated at a temperature that is higher than the melting point of the binder material and lower than the melting point of the basic fiber, the basic fibers and the core fiber easily plastically deform and the binder material is melted and permeates between the basic fibers or the core fiber. Thereafter, when the temperature returns to the temperature lower than the above-mentioned temperature, the basic fibers and the core fibers maintain the shape formed in heating. Further, the molten binder material is solidified and bonds the basic fibers or the core fibers. Therefore, the portion heated at the given temperature or more is hardened, as compared with the state before heating.

Specifically, the following configuration is provided. The basic fiber of the non-woven fabric is made of PET (Polyethylene terephthalate). The binder fiber includes a core fiber made of PET and a binder material layer made of a copolymer resin of PET and PEI (Polyethylene isophthalate). Further, the binder material layer is formed at the outside of the core fiber. The melting point of the basic fibers or the core fibers (that is, PET) is about 250°C. The melting point of the binder material is 110°C to 150°C. Therefore, when the non-woven fabric is heated at a temperature between 110°C to 250°C, the basic fibers and the core fibers easily plastically deform and the binder material is melted and permeates between the basic fibers or the core fibers. Thereafter, when the temperature returns to the temperature lower than the above-mentioned temperature, the shape formed in the heating is maintained and the binder material solidifies and bonds the basic fibers or the core fibers, such that hardness increases as compared with the state before the heating.

The foam may be made of a thermoplastic resin material having a certain melting point. The foam made of the thermoplastic resin material easily plastically deforms, when being heated to around the melting point.

As shown in FIG. 1, the portion of the first wire harness 9a has a configuration where the portion of the wire 91 are covered with the thermoplastic material 92 and the other thermoplastic material 93, which are formed in given cross-sectional shapes.

Further, a main body portion 941 and a welded portion 942 are formed at the thermoplastic material 92 and the other thermoplastic material 93.

The main body portion 941 is the portion where the portion of the wire 91 is embedded and is formed in a bar shape having a given cross-sectional shape. In FIG. 1, a configuration is illustrated in which the main body portion 941 is formed in a bar shape or a column shape having a substantially hexagonal cross-section. Further, in the following description, the configuration in which the main body portion 941 is formed in a column shape or a bar shape having a substantially hexagonal cross-section is exemplified.

The welded portion 942 protrudes outward from the outer circumference of the main body portion 941, which is a wrinkled portion extending in the axial direction of the main body portion 941. The welded portion 942 is a portion where the thermoplastic material 92 and the other thermoplastic material 93 are welded to each other. That is, a bonding surface of the thermoplastic material 92 and the other thermoplastic material 93 is positioned at the middle portion in the thickness direction of the welded portion 942. The thickness of the welded portion 942 (in the copolymerization direction of the thermoplastic material 92 and the other thermoplastic material 93) is smaller than the thickness of the main body portion 941.

In the thermoplastic material 92 and the other thermoplastic material 93, the surface portion of the main body portion 941 (= the surface and the portion near the surface) is formed harder than the central portion (= the portion contacting the portion of the wire 91 and the portion near the contacting portion). Therefore, the hard surface portion functions as a protector that maintains the portion of the wire 91 in the given shape and protects the portion of the wire 91. Meanwhile, in the thermoplastic material 92 and the other thermoplastic material 93, the central portion of the main body portion 941 is formed softer than the surface portion. Therefore, the central portion functions as a shock-absorbing material that protects the portion of the wire 91 from vibration or impact. Further, the thermoplastic material 92 and the other thermoplastic material 93 elastically covers the portion of the wire 91. Therefore, even if vibration or an external force is applied to the first wire harness 9a, rattling or impact sound is not generated between wire 91 and the thermoplastic material 92 or the other thermoplastic material 93.

Next, a method of manufacturing a wire harness according to the first embodiment of the present invention is described. FIGS. 2 and 3 are external perspective views schematically showing the configurations of mechanisms used in the method of manufacturing a wire harness according to the first embodiment of the present invention. In the method of manufacturing a wire harness according to the first embodiment of the present invention, a first holder 1a, and a pair of molds (for example, mold) composed of an upper mold 3a and a lower mold 2a are used. FIG 2 is an external perspective view schematically showing the configuration of the first holder 1a and the lower mold 2a and FIG 3 is an external perspective view schematically showing the configuration of the upper mold 3a. Further, in FIG 2, the upper side is the side opposite to the upper mold 3a, and in FIG. 3, the upper side is the side opposite to the lower mold 2a.

For the convenience of description, the upper side in FIG. 2 is the upper side of the first holder 1a and the lower mold 2a and the lower side in FIG. 2 is the lower side of the first holder 1a and the lower mold 2a. Further, the upper side in FIG. 3 is the lower side of the upper mold 3a and the lower side in FIG. 3 is the upper side the upper mold 3a.

The first holder 1a is a member having a function that press-forms the thermoplastic material 92 or the other thermoplastic material 93 or keeps the manufactured first wire harness 9a in the given shape (in other words, prevents unexpected or undesired deformation) in the process of manufacturing the first wire harness 9a.

A recess that is a groove accommodating the portion of the wire 91 is formed on the upper side of the first holder 1a. The recess is a portion defined by a bottom 12 and both sides 13 of the bottom 12 and is a portion for forming the main body portion 941. Therefore, the cross-sectional shapes of the bottom 12 and the sides 13 are designed on the basis of the cross-sectional shape of the main body portion 941. As described above, when the cross-section of the main body portion 941 is formed in a substantially hexagonal shape, the bottom 12 is formed in a long thin plane and the sides 13 are formed in inclined surfaces gradually widening upward. That is, the cross-sectional shape of the recess gradually increases in width upward, with a flat bottom.

A pressing portion 11 is formed at both sides of the recess in the form of the groove. Pressing portions 11 are portions to form the welded portion 942 by pressing and compressing the thermoplastic material 92 and the other thermoplastic material 93. Specifically, pressing portions 11 are planes formed in the longitudinal direction of the sides 13, outside the sides 13.

Further, the guide pins 14 are provided to extend upward at an interval on the sides 13. The guide pins 14 are members for locating and holding the portion of the wire 91. specifically, the guide pins 14 are members for keeping the portion of the wire 91 disposed on the first holder 1a at the state received in the recess (not to protrude from the recess toward the pressing portion 11) in the process of manufacturing the first wire harness 9a. The guide pins 14 are members having a needle shape or a thin rod shape, and are preferably pointed at the end such that the thermoplastic material 92 and the other thermoplastic material 93 can be stuck (or passed) by the pins. Further, the length of the guide pins 14 (protrusion length from the top surface of pressing portions 11) is set larger than the thickness of the thermoplastic material 92 before press-forming. More preferably, the length is set larger than "(thickness of the thermoplastic material 92 before forming) + (diameter of wire 91 (or outer diameter of the bundle of wires))".

Further, the position where the guide pins 14 are disposed vertically or the number of the guide pins 14 is not particularly limited. As described above, it is preferable to prevent the portion of the wire 91 from protruding toward pressing portions 11. Therefore, the guide pins 14 may be vertically disposed inside between pressing portions 11 or may be vertically disposed around both outsides of the bottom 12, other than being vertically disposed on the sides 13. Further, the gaps between vertically disposed the guide pins 14 are not particularly limited. For example, when the bottom 12 is formed straight, the gaps between the guide pins 14 may be set large, or when the bottom 12 is curved, the gaps between the guide pins 14 may be set small. In this case, particularly, the gaps between the guide pins 14 may be set small inside the curve. Further, when the bottom 12 is curved, the guide pins 14 may be vertically disposed only inside the curve.

The first holder 1a is made of a material having a high heat conductivity and has a small amount of heat accumulation (that is, easily following a change of the environmental temperature). In particular, the first holder 1a has a configuration that makes it easy to transfer heat upward/downward. For example, the first holder 1a is made of a thin metal plate and formed by performing sheet metal machining. When the first holder 1a is formed of a thin metal plate, it is easy to transfer heat upward/downward (in the thickness direction of the metal plate) and it is possible to reduce the mass of the first holder 1a, thereby decreasing the amount of heat accumulation.

The lower side shape of the first holder 1a is not particularly limited. When the first holder 1a is formed by sheet metal machining, a protrusion taking the shape of the recess (the bottom 12 and the sides 13) formed on the upper side is formed on the lower side of the first holder 1a.

The lower mold 2a is a member that heats and press-forms the thermoplastic material 92 and the other thermoplastic material 93, together with the upper mold 3a through the first holder 1a. That is, it is possible to press-form the thermoplastic material 92 and the other thermoplastic material 93 into a given cross-sectional shape by plastically deforming the thermoplastic material 92 and the other thermoplastic material 93 and weld the thermoplastic material 92 and the other thermoplastic material 93.

A portion taking the shape of the lower side surface of the first holder 1a is formed on the upper side of the lower mold 2a. That is, the first holder 1a may be disposed on the upper side of the lower mold 2a, and in this state, a portion, where the lower side surfaces of the first holder 1a (each lower side surface of the pressing portion 11, the sides 13, and the bottom 12) are in contact with the approximately entire the lower mold 2a, is formed. Specifically, a first pressing portion 21 pressing the lower side surface of the pressing portion 11 of the first holder 1a, a second pressing portion 22 pressing the lower side surface of the bottom 12, and a third pressing portion 23 pressing the lower side surfaces of the sides 13 are formed at the lower mold 2a. As described above, a groove-shaped recessed portion (the second pressing portion 22 corresponds to the bottom of the recessed portion and the third pressing portion 23 corresponds to the sides of the recessed portion) where the bottom 12 and the sides 13 of the first holder 1a can be fitted like being fallen is formed at the upper side of the lower mold 2a. Further, the first pressing portion 21 that is in contact with the lower side surface of the pressing portion 11 of the first holder 1a is formed at both sides of the recessed portion. Further, a shearing step-surface 24 for trimming the thermoplastic material 92 and the other thermoplastic material 93 is formed at both outsides of the first pressing portion 21.

The lower mold 2a includes a heater, which is not shown. Further, the first pressing portion 21, the second pressing portion 22, and the third pressing portion 23 are maintained at a given temperature by the heater. Further, the given temperature is described below. In addition, various heaters known in the art can be used for the heater. For example, an electric heating wire is used for the heater, and the electric heating wire may be embedded in the lower mold 2a or mounted on the outer side of the lower mold 2a. Moreover, a channel (for example, a hole) through which fluid can flow is formed in the lower mold 2a, such that fluid at an adjusted temperature (air, liquid (oil or the like), vapor (overheated vapor or the like) at an adjusted temperature) flows through the channel.

The upper mold 3a is a member that can press-form and heating the thermoplastic material 92 and the other thermoplastic material 93, together with the lower mold 2a. Further, the thermoplastic material 92 and the other thermoplastic material 93 are press-formed in a given cross-sectional shape, and the thermoplastic material 92 and the other thermoplastic material 93 are welded. A groove having a given cross-sectional shape is formed on the lower side surface (upper surface in FIG 3) of the upper mold 3a. The center line of the groove is formed in the shape of the center line of wire harness 9a according to the first embodiment of the present invention. A curved shape having a given curvature is shown in FIG. 3.

The bottom of the groove is formed in substantially the same shape as the cross-sectional shape of wire harness 9a according to the first embodiment of the present invention. The groove-shaped recessed portion (the portion formed by a second pressing portion 32 and a third pressing portion 33) which can accommodate a portion of the wire 91 and a first pressing portion 31 for welding by applying a compressing force to the contacting surface of the thermoplastic material 92 and the other thermoplastic material 93 are formed on the bottom of the groove.

Therefore, a narrow groove (recessed portion) is formed on the bottom of the groove. Further, the bottom of the narrow groove becomes the second pressing portion 32, the sides of the narrow groove become third pressing portions 33, and both outsides of the narrow groove become the first pressing portion 31. Further, a shearing step-surface 34 for trimming the thermoplastic material 92 and the other thermoplastic material 93 is formed at the sides of the groove (= the outside stepped surface of the first pressing portion 31). In addition, the guide pin avoiding holes 35 are formed at given positions through the third pressing portion 33.

The upper mold 3a includes a heater, which is not shown. Further, the first pressing portion 31, the second pressing portion 32, and the third pressing portion 33 can be maintained at a given temperature by the heater. The given temperature is the same as that of the lower mold 2a. Further, the heater may be the same heater as that of the lower mold 2a. Therefore, the description is not provided.

Further, the first holder 1a is disposed on the lower mold 2a, and in this state, the upper mold 3a and the lower mold 2a are bonded, such that the first pressing portion 21, the second pressing portion 22, the third pressing portion 23, and the portion where the shearing step-surface 24 is formed can be fitted in the groove (= a portion fitted in the shearing step-surface 34) of the upper mold 3a. In addition, the front-ends of the guide pins 14 of the first holder 1a can be inserted in the guide pin avoiding holes 35 of the upper mold 3a. Accordingly, the lower mold 2a, the first holder 1a disposed on the lower mold 2a, and the upper mold 3a can be disposed close to a certain distance.

When the portion where the first pressing portion 21, the second pressing portion 22, the third pressing portion 23, and the portion where the shearing step-surface 24 is formed are formed, in the lower mold 2a, are fitted in the groove (= a portion fitted in the shearing step-surface 34) of the upper mold 3a, the upper side surface of the pressing portion 11 of the first holder 1a and pressing portion 31 of the upper mold 3a are opposite to each other with a gap. Similarly, the upper side surface of the bottom 12 of the first holder 1a and the second pressing portion 32 of the upper mold 3a are opposite to each other with a gap, while the upper side surfaces of the sides 13 of the first holder 1a and the third pressing portion 33 of the upper mold 3a are opposite to each other with a gap.

Further, the cross-sectional shapes of the upper side surface of the pressing portion 11 of the first holder 1a, the upper side surface of the bottom 12, and the upper side surfaces of the sides 13, and the space surrounded by the shearing step-surface 34 of the upper mold 3a, the first pressing portion 31, the second pressing portion 32, and the third pressing portion 33 are the cross-sectional shape of the first wire harness 9a (= the cross-sectional shape of the thermoplastic material 92 and the other thermoplastic material 93 covering a portion of the wire 91). In this state, the distance between the upper side surface of the pressing portion 11 of the first holder 1a and the first pressing portion 31 of the upper mold 3a becomes smaller than the distance between the upper side surface of the bottom 12 of the first holder 1a and the second pressing portion 32 of the upper mold 3a.

In addition, the shearing step-surface 24 of the lower mold 2a and the shearing step-surface 34 of the upper mold 3a are in contact or opposite to each other with a small gap.

A method of manufacturing a wire harness according to the first embodiment of the present invention is as follows. FIGS. 4 to 7 are sectional views schematically showing processes of the method of manufacturing a wire harness according to the first embodiment of the present invention. Specifically, FIG. 4 is a view showing when the thermoplastic material 92, a portion of the wire 91, and the other thermoplastic material 93 are disposed on the first holder 1a. FIG. 5 is a view showing when the first holder 1a where the thermoplastic material 92, the portion of the wire 91, and the other thermoplastic material 93 are disposed, is disposed on the lower mold 2a. FIG. 6 is a view showing when the thermoplastic material 92 and the other thermoplastic material 93 are pressed by the upper mold 3 a and the lower mold 2a. FIG. 7 is a view showing when the portion of the manufactured first wire harness 9a is removed from the upper mold 3a and the lower mold 2a while being disposed on the first holder 1a.

First, as shown in FIG. 4, the thermoplastic material 92 is disposed at the upper side of the first holder 1a. Further, the front-ends of the guide pins 14 protrude through the thermoplastic material 92. In this state, the portion of the wire 91 is disposed on the thermoplastic material 92. As described above, when the length of the guide pins 14 (the protrusion length from the upper side surface of the pressing portion 11) is set larger than the thickness of the thermoplastic material 92, as shown in FIG 4, the front-ends of the guide pins 14 protrude from the other side through the thermoplastic material 92, when one side of the thermoplastic material 92 is in contact with the upper side surface of the pressing portion 11 of the first holder 1a. Therefore, the portion of the wire 91 can be positioned and arranged by protruding the guide pins 14. Specifically, the portion of the wire 91 can be disposed at a position where it is received in the recessed portion (the bottom 12 and the sides 13) of the first holder 1a, not protruding toward the upper side surface of the pressing portion 11.

Further, when the length of the guide pins 14 (the protrusion length from the upper side surface of the pressing portion 11) is set larger than "the thickness of the thermoplastic material 92 before formed + the diameter of wire 91 (or the outer diameter of the bundle of wires)", as described above, the length of the portion protruding through the thermoplastic material 92 is larger than the diameter of wire 91 (or the outer diameter of the bundle of wires). Therefore, the portion of the wire 91 disposed between the guide pins 14 is retained or prevented from separating from the position where it is fitted between the guide pins 14.

In addition, the portion of the wire 91 is disposed on the thermoplastic material 92 and the other thermoplastic material 93 is additionally disposed thereon. When the length of the guide pins 14 is the length described above, the front-ends of the guide pins 14 stick in the other thermoplastic material 93. Therefore, the portion of the wire 91 is prevented from separating from the guide pins 14, after the other thermoplastic material 93 is disposed. Further, when the front-ends of the guide pins 14 stick in the other thermoplastic material 93, the first holder 1a, the thermoplastic material 92, the portion of the wire 91, and the other thermoplastic material 93 are integrally combined. Therefore, they are prevented or restrained from separating. Accordingly, it becomes easy to handle them in the manufacturing processes. As described above, the portion of the wire 91 is disposed on the first holder 1a such that it is disposed between the thermoplastic material 92 and the other thermoplastic material 93.

Next, as shown in FIG 5, the first holder 1a where the thermoplastic material 92, wire 91, and the other thermoplastic material 93 are disposed thereon is inserted into between the upper mold 3a and the lower mold 2a and disposed on the lower mold 2a.

Further, the first pressing portion 31, the second pressing portion 32, and the third pressing portion 33 of the upper mold 3a and the first pressing portion 21, the second pressing portion 22, and the third pressing portion 23 of the lower mold 2a are maintained at a given temperature by the heater.

The given temperature is a temperature higher than the melting point of the binder material and lower than the melting point of a basic fiber and a core fiber, when the thermoplastic material 92 and the other thermoplastic material 93 are made of the above described non-woven fabric. For example, when the non-woven fabric is used for the thermoplastic material 92 and the other thermoplastic material 93, the given temperature is a temperature between 110°C and 250°C. Further, when a foamed body made of a thermoplastic resin material is used for the thermoplastic material 92 and the other thermoplastic material 93, the given temperature is a temperature equal to or higher than the softening point of the foamed body or the melting point of bonding resin, such as the binder material.

Further, as shown in FIG 6, the upper mold 3a and the lower mold 2a are moved close. Specifically, the distance between the upper side surface of the pressing portion 11 of the first holder 1a and the first pressing portion 31 of the upper mold 3a becomes smaller than the sum of the thickness of the thermoplastic material 92 before press-formed and the thickness of the other thermoplastic material 93 before press-formed. As described above, since the guide pins 14 of the first holder 1a are inserted in the guide pin avoiding holes 35 of the upper mold 3a, it is possible to move the first holder 1a, the lower mold 2a, and the upper mold 3 a close to each other at the distance. Further, the shearing step-surface 24 of the lower mold 2a and the shearing step-surface 34 of the upper mold 3a are in contact (or opposite to each other with a small gap).

By doing so, the press-forming of the thermoplastic material 92 and the other thermoplastic material 93 is performed. Further, this state is maintained (that is, press-forming continues) for a given time. The given time is described below.

In the thermoplastic material 92 and the other thermoplastic material 93, the portion fitted by the upper side surface of the pressing portion 11 of the first holder 1a and pressing portion 31 of the upper mold 3a is pressed and compressed and deformed by the first pressing portion 21 of the lower mold 2a (that is, the upper side surface of the pressing portion 11 of the first holder 1a which is pressed by the first pressing portion 21 of the lower mold 2a) and the first pressing portion 31 of the upper mold 3a. Further, the portion is softened and plastically deformed by the heat generated from the heaters of the upper mold 3 a and the lower mold 2a. Therefore, density of the portion increases and the thermoplastic material 92 and the other thermoplastic material 93 are pressed. Further, the contacting surfaces of the thermoplastic material 92 and the other thermoplastic material 93 are heated and welded to each other.

Specifically, when the non-woven fabric is used for the thermoplastic material 92 and the other thermoplastic material 93, the basic fiber of the non-woven fabric and the core fiber of the binder fiber are softened and plastically deformed by the heat. However, since the temperature is lower than the melting points of the basic fiber and the core fiber, softening occurs, but melting does not occur, such that the fiber state is maintained. Meanwhile, since the temperature is higher than the melting point of the binder material, the binder material of the binder fiber is melted and permeates between the basic fiber or the core fiber, and the molten binder material spreads even on the contacting surface of the thermoplastic material 92 and the other thermoplastic material 93, at the portion fitted between the upper side surface of the pressing portion 11 of the first holder 1a and the first pressing portion 31 of the upper mold 3 a.

Further, in the thermoplastic material 92, the surface portions of the portion being in contact with the upper side surface of the bottom 12 of the first holder 1a or the upper side surfaces of the sides 13 is pressed, heated, and plastically deformed. Similarly, in the other thermoplastic material 93, the surface portion of the portion being in contact with the second pressing portion 32 and the third pressing portion 33 of the upper mold 3a is also pressed, heated, and plastically deformed. Accordingly, the cross-sections of the thermoplastic material 92 and the other thermoplastic material 93 are plastically deformed entirely in the substantially same as the shape of the space formed between the first holder 1a and the upper mold 3a.

As a result, in the thermoplastic material 92 and the other thermoplastic material 93, the portion fitted between the upper side surface of the bottom 12 of the first holder 1a or the upper side surface of the side 13 of the first holder 1a and the second pressing portion 32 or the third pressing portion 33 of the upper mold 3a becomes a main body portion 941. Further, the portion fitted and pressed between the upper side surface of the pressing portion 11 of the first holder 1a and the first pressing portion 31 of the upper mold 3a becomes a welded portion 942.

Further, in the thermoplastic material 92, the binder material in the surface portion of the portion being in contact with the upper side surface of the bottom 12 and the upper side surfaces of the sides 13 of the first holder 1a is melted by heat, spreads on the surface portion, and permeates between the base fiber or the core fiber. Similarly, in the other thermoplastic material 93, the binder material in the surface portion of the portion being in contact with the second pressing portion 32 or the third pressing portion 33 of the upper mold 3a is melted by heat, spreads on the surface portion, and permeates between the basic fiber or the core fiber.

In addition, when a foamed body made of a thermoplastic resin material is used for the thermoplastic material 92 and the other thermoplastic material 93, the foamed body is softened and plastically deformed by heat. Further, in the thermoplastic material 92 and the other thermoplastic material 93, the portion fitted between the upper side surface of the pressing portion 11 of the first holder 1a and the first pressing portion 31 of the upper mold 3a is compressed and deformed, such that the density increases.

Moreover, in the thermoplastic material 92, the surface portion of the portion being in contact with the upper side surface of the bottom 12 or the upper side surfaces of the sides 13 of the first holder 1a is also pressed, heated, and plastically deformed. Similarly, in the other thermoplastic material 93, the surface portion of the portion being in contact with the second pressing portion 32 and the third pressing portion 33 of the upper mold 3a is also pressed, heated, and plastically deformed. Accordingly, the cross-sections of the thermoplastic material 92 and the other thermoplastic material 93 are plastically deformed entirely in the substantially same as the shape of the space formed between the first holder 1a and the upper mold 3a. Further, in the thermoplastic material 92, the surface portion of the portion being in contact with the upper side surface of the bottom 12 and the upper side surfaces of the sides 13 of the first holder 1a is softened, compressed, and plastically deformed by heat, such that density increases. Similarly, in the other thermoplastic material 93, the surface portion of the portion being in contact with the second pressing portion 32 or the third pressing portion 33 of the upper mold 3a is also softened and compressed by heat, and density increases.

Further, the heat generated from the lower mold 2a is transferred to the thermoplastic material 92 or the other thermoplastic material 93 through the first holder 1a. As described above, the first holder 1a is made of a material having high heat conductivity, such that the heat can be easily transferred in upward/downward direction. Therefore, the heat generated from the lower mold 2a is easily transferred to the thermoplastic material 92 or the other thermoplastic material 93. Therefore, it is not necessary to increase the given time.

Furthermore, in the thermoplastic material 92 and the other thermoplastic material 93, the portions 92' and 93' protruding outside than the first pressing portion 31 of the upper mold 3 a and the pressing portion 11 of the first holder 1a (the first pressing portion 21 of the lower mold 2a) are separated by the shearing step-surface 34 of the upper mold 3a and the shearing step-surface 24 of the lower mold 2a. Therefore, the unnecessary portions of the thermoplastic material 92 and the other thermoplastic material 93 are removed (that is, trimmed) at the same time of the press-forming by the upper mold 3a and the lower mold 2a.

Next, as shown in FIG. 7, the upper mold 3a and the lower mold 2a are separated, after the given time elapses.

The given time is a time longer than the time taking the welded portion 942 (the portion fitted between the pressing portion 11 of the first holder 1a and the first pressing portion 31 of the upper mold 3a), in the thermoplastic material 92 and the other thermoplastic material 93, to reach the given temperature throughout the entire vertical length, in which the central portion of the main body portion 941 (the wire 91 and the periphery thereof) does not reach the given temperature. As described above, since the thickness of the welded portion 942 is smaller than the thickness of the main body portion 941, the welded portion 942 can be entirely heated at the given temperature, before the central portion of the main body portion 941 reaches the given temperature.

With the above time set, when the non-woven fabric is used for the thermoplastic material 92 and the other thermoplastic material 93, the portion fitted between the pressing portion 11 of the first holder 1a and the first pressing portion 31 of the upper mold 3a, in the thermoplastic material 92 and the other thermoplastic material 93, is plastically deformed and decreases in vertical dimension, the binder material is melted throughout the portion, and the binder material permeates into the entire portion. Meanwhile, since the central portion of the main body portion 941 (wire 91 and the periphery thereof) does not reach the given temperature, the binder material is not melted at the portion being contact with wire 91 and the periphery thereof.

Further, when a foamed body is used for the thermoplastic material 92 and the other thermoplastic material 93, the portion fitted between the pressing portion 11 of the first holder 1a and the first pressing portion 31 of the upper mold 3a, in the thermoplastic material 92 and the other thermoplastic material 93, is plastically deformed and decreases in vertical dimension. Further, the main body portion 941 is also pressed and compressed by the upper side surface of the bottom 12 or the upper side surfaces of the sides 13 of the first holder 1a and the second pressing portion 32 or the third pressing portion 33 of the upper mold 3a. In this process, the surface portion of the main body portion 941 has reached to a temperature where plastic deformation is easy, but the central portion (that is, the periphery of the portion of the wire 91) is at a temperature lower than the given temperature and difficult to plastically deform, such that only the surface portion is plastically deformed and the central portion is not deformed (the central portion may be considered to be elastically deformed right after pressing starts, but the central portion returns to the non-deformed state by plastic deformation of the surface portion).

Then, the portion of the first wire harness 9a is removed from the lower mold 2a while being disposed on the first holder 1a. Thereafter, the portion of the first wire harness 9a is cooled while being disposed on the first holder 1a. Further, the portion of the first wire harness 9a is removed from the first holder 1a after the portion of the first wire harness 9a becomes at another given temperature or less. Further, the cooling method is not particularly limited. For example, a method of placing it at a room temperature may be used, in addition to a method of accommodating it in a refrigerator and a method of spraying a gas at a room temperature or a low temperature onto it.

Another given temperature means a temperature where the thermoplastic material 92 and the other thermoplastic material 93 are not deformed by thermoplasticity (temperature that does not cause softening), in which the binder material is in a solid state, when the above non-woven fabric is used for the thermoplastic material 92 and the other thermoplastic material 93. When a foamed body made of a thermoplastic resin material is used for the thermoplastic material 92 and the other thermoplastic material 93, another given temperature means a temperature where the thermoplastic resin material is in a solid state and not deformed by thermoplasticity (temperature that does not cause softening).

Further, since the first holder 1a is made of a material having high heat conductivity and can easily vertically transfer heat, the heat of the thermoplastic material 92 or the other thermoplastic material 93 is rapidly dissipated to the outside through the first holder 1a. Further, when the first holder 1a is formed of a metal plate by sheet metal machining, the amount of heat accumulation is small, such that the temperature immediately starts to decrease when it is removed from the lower mold 2a. Therefore, the portion of the first wire harness 9a according to the first embodiment of the present invention, which is disposed on the first holder 1a, (particularly, the thermoplastic material 92 or the other thermoplastic material 93) is not heated by the heat of the first holder 1a after being removed from the lower mold 2a. Therefore, it is possible to prevent it from unnecessarily heated. Therefore, it becomes easy to control the properties of the thermoplastic material 92 or the other thermoplastic material 93.

When the temperature of the thermoplastic material 92 and the other thermoplastic material 93 of the first wire harness 9a decreases at the other given temperature or less, the base fiber or the core fiber of the thermoplastic material 92 and the other thermoplastic material 93 is difficult to plastically deform and is fixed in the shape formed by the press-forming. Further, the binder material is solidified. As the binder material that has permeated in between the base fibers or the core fibers is solidified, the base fibers or the core fibers are bonded by the binder material, respectively. Therefore, the portion where the binder material has melted and solidified becomes harder than the other portions.

As described above, in the thermoplastic material 92 and the other thermoplastic material 93, at the portion fitted between the pressing portion 11 of the first holder 1a and the first pressing portion 31 of the upper mold 3 a (that is, the welded portion 942), the binder material is melted throughout the entire length in the thickness direction and solidified. Further, the welded portion 942 is compressed, such that density of the base fibers or the core fibers increases. Therefore, the welded portion 942 increases in hardness in comparison to other potions. Further, as the binder material is solidified, the thermoplastic material 92 and the other thermoplastic material 93 are integrally bonded.

In the thermoplastic material 92 and the other thermoplastic material 93, since the surface portion of the main body portion 941 (the portion fitted between the bottom 12 of the first holder 1a and the second pressing portion 32 of the upper mold 3a and the portions fitted between the sides 13 of the first holder 1a and the third pressing portion 33 of the upper mold 3 a) has reached the given temperature at the press-forming, binder material is melted and solidified. Therefore, in the surface portion of the main body portion 941, the base fibers or the core fibers are bonded, respectively, by the binder material. Further, the density increases by the pressing. Therefore, the surface portion is hardened as compared with before the press-forming.

In contrast, the central portion of the main body portion 941 (that is, the portion being in contact with the portion of the wire 91 and the periphery thereof) has not reached the given temperature, the binder material is not melted. Therefore, such portion is in substantially the same state as the state before the forming (however, density may be slightly increased by the press-forming).

When a foamed body is used for the thermoplastic material 92 and the other thermoplastic material 93, the welded portion 942 (= the portion fitted between the pressing portion 11 of the first holder 1a and the first pressing portion 31 of the upper mold 3a), in the thermoplastic material 92 and the other thermoplastic material 93, is compressed and increases in density. Therefore, the welded portion 942 increases in hardness in comparison to other potions. In the thermoplastic material 92 and the other thermoplastic material 93, the surface portion of the main body portion 941 is plastically deformed and increases in density. Therefore, the surface portion is harder than before the press-forming. In contrast, the central portion is not plastically deformed and maintained in the state before the press-forming.

As described above, in the main body portion 941, the surface portion becomes hardened but the central portion has substantially the same hardness as that before the press-forming. Therefore, it is possible to form a hard layer in the surface portion of the main body portion 941. Further, it is possible to provide the hard surface portion with a function of maintaining the portion of the first wire harness 9a in a given shape. Further, it is possible to provide the hard surface portion with a function as a protector that protects the portion of the wire 91. Further, the central portion of the main body portion 941 can be maintained in the soft state before the press-forming, such that the central portion may be provided with a function as a shock-absorbing material or a soundproof material for the portion of the wire 91.

The first wire harness 9a is manufactured by the processes described above.

According to the method of manufacturing a wire harness of the first embodiment of the present invention, the following operational effects can be shown, as compared with when a protector or a form-keeping member of a resin-molded product is used.

First, the upper mold 3a and the lower mold 2a that are used in the method of manufacturing a wire harness according to the first embodiment of the present invention can be manufactured with a simple structure at low cost as compared with a mold for manufacturing a molded product. Therefore, it is possible to reduce the equipment cost. Further, according to the method of manufacturing a wire harness of the first embodiment of the present invention, it is possible to manufacture the first wire harness 9a at low cost, as compared with using a protector or a form-keeping member of a resin-molded product, because it is possible to use an inexpensive material (a thermoplastic material). Therefore, it is possible to reduce the product price.

Further, the work is simplified, as compared with fitting the portion of the wire 91 in a protector or a form-keeping member of a resin-molded product.

In addition, in a configuration where a protector or a form-keeping member of a resin-molded product is used, when a gap exists between the inner surface of the protector or the form-keeping member and a portion of a wire, the portion of the wire hits against the inner surface of the protector or the form-keeping member due to vibration, thereby generating rattling or impact sound. Further, although it may be possible to prevent rattling or impact sound by inserting a shock-absorbing material, such as sponge, inside the resin-molded protector or the form-keeping member, but in this configuration, the number of parts or work processes increases, such that manufacturing cost or the product price may increase.

In contrast, in the first wire harness 9a manufactured by the method of manufacturing a wire harness according to the first embodiment of the present invention, the portion of the wire 91 is embedded in between the thermoplastic material 92 and the other thermoplastic material 93 and in elastic contact with the thermoplastic material 92 and the other thermoplastic material 93. Therefore, rattling or impact sound is not generated between the thermoplastic material 92 and the other thermoplastic material 93. Further, the thermoplastic material 92 and the other thermoplastic material 93 function as a form-keeping member or a protector and also function as a shock-absorber that protects the portion of the wire 91 from impact or vibration. As described above, according to the method of manufacturing a wire harness according to the first embodiment of the present invention, since the number of parts or work processes is not increased, it is possible to reduce the cost of parts or the manufacturing cost.

Further, according to the method of manufacturing a wire harness according to the first embodiment of the present invention (that is, according to the configuration using the first holder 1a), it is possible to show the following effects as compared with the configuration not using the first holder 1a.

In the configuration directly press-forming the thermoplastic material 92 and the other thermoplastic material 93 with an upper mold and a lower mold, without using the first holder 1a, processes of directly disposing the thermoplastic material 92 on the upper side surface of the lower mold, further disposing the portion of the wire 91 thereon, and further disposing the other thermoplastic material 93 thereon are required. Therefore, when a time passes for the processes (particularly, when time passes after disposing the thermoplastic material 92 on the lower mold), the thermoplastic material 92 disposed on the lower mold may be plastically deformed in an unexpected shape by the heat of the lower mold before press-forming. Therefore, the thermoplastic material 92 and the other thermoplastic material 93 may not be formed in given shapes.

When long time passes with the thermoplastic material 92 disposed on the lower mold, the heat of the lower mold is transferred entirely to the thermoplastic material 92, such that the coating material of the portion of the wire 91 may be damaged by the heat.

Further, the upper mold and the lower mold are maintained at a temperature where the thermoplastic material 92 and the other thermoplastic material 93 can be plastically deformed. Therefore, in this state, when the process of disposing the thermoplastic material 92 and the other thermoplastic material 93 on the lower mold is performed, a worker may be burned by being in contact with the upper mold and/or the lower mold.

In addition, in order to prevent unintended deformation of the thermoplastic material 92 or the worker from being burned, it may be possible to consider a configuration in which the work of disposing the thermoplastic material 92, the portion of the wire 91, and the other thermoplastic material 93 on the lower mold is performed when the lower mold is at a low temperature (= temperature where the thermoplastic material 92 does not plastically deform and the worker is not burned) and the upper mold and the lower mold are heated only when the thermoplastic material 92 and the other thermoplastic material 93 are press-formed. However, since such configuration is required to heat and cool the upper mold and the lower mold every time when the first wire harness 9a is manufactured, the time for manufacturing greatly increases. Further, according to this method, it is difficult to control the amount of heat that is given to the thermoplastic material 92 and the other thermoplastic material 93.

Moreover, in the configuration in which the upper mold and the lower mold are heated only in the press-forming (that is, the configuration in which the upper mold and the lower mold start to be heated after pressing starts), heat is applied to the thermoplastic material 92, the wire 91, and the other thermoplastic material 93 even until the upper mold and the lower mold reach the given temperature. In this case, when the lower mold or the upper mold approximately reaches the given temperature, heat is transferred from the surface to the inside of the thermoplastic material 92 and the other thermoplastic material 93, such that the portion of the wire 91 or even the periphery thereof may increase in temperature. When the portion of the wire 91 or the periphery thereof may increase in temperature, the coating material (generally made of a synthetic resin material) of the portion of the wire 91 may be damaged by the heat. When the coating material of the portion of the wire 91 is damaged by the heat, it is difficult to keep the portions of wires 91 insulated, and it may be difficult to maintain the performance of the wire harness.

In contrast, according to the method of manufacturing a wire harness according to the first embodiment of the present invention, the first holder 1a needs not to be heated in the work of disposing the thermoplastic material 92, wire 91, and the other thermoplastic material 93 on the first holder 1a. Therefore, it is possible to heat the thermoplastic material 92 and the other thermoplastic material 93 only when press-forming is performed by the upper mold 3a and the lower mold 2a. As described above, before the press-forming, since the thermoplastic material 92 and the other thermoplastic material 93 are not heated, such that the thermoplastic material 92 and/or the other thermoplastic material 93 does not unexpectedly deform before the press-forming. Therefore, it is possible to form the thermoplastic material 92 and the other thermoplastic material 93 accurately in given shapes.

Further, it is possible to immediately perform press-forming after disposing the first holder 1a where the thermoplastic material 92, wire 91, and the other thermoplastic material 93 are disposed on the lower mold 2a. That is, the thermoplastic material 92 and the other thermoplastic material 93 are not heated for a long time before the press-forming is performed. Therefore, it is possible to perform press-forming before heat is transferred to the inside of the thermoplastic material 92. Accordingly, it is possible to perform press-forming before the inside of the thermoplastic material 92 (particularly, the portion being in contact with the portion of the wire 91 and the periphery thereof) reaches the given temperature. Therefore, since the inside of the thermoplastic material 92 is not hardened, the thermoplastic material 92 keeps the function as a soundproof material or a shock-absorbing material.

In addition, the work of disposing the thermoplastic material 92, the portion of the wire 91, and the other thermoplastic material 93 on the first holder 1a may be performed at a place away from the upper mold 3 a and the lower mold 2a. Therefore, it is possible to achieve a wide work space and easily perform the work. That is, the upper mold 3a and the lower mold 2a are generally assembled with a press. Accordingly, the work of directly disposing the thermoplastic material 92 on the lower mold 2a should be performed in a limit space between the upper mold 3a and the lower mold 2a, in which the upper mold 3a may interfere with the work. In contrast, it is possible to perform the work at a place where the work is not interfered, regardless of the work place, in the configuration of using the first holder 1a. Further, the worker is not burned in the work of disposing the thermoplastic material 92, the wire 91, and the other thermoplastic material 93 on the first holder 1a.

Moreover, as compared with the configuration of heating the upper mold and the lower mold only at the press-forming, it is possible to maintain the upper mold 3a and the lower mold 2a at the given temperature even in the other cases (for example, in standby), in addition to in the press-forming. Therefore, the press-forming may be immediately performed after the work of disposing the thermoplastic material 92, the portion of the wire 91, and the other thermoplastic material 93 on the first holder 1a is completed. Accordingly, it is possible to reduce the time required for manufacturing the first wire harness 9a. Further, since it is possible to keep the upper mold 3a and the lower mold 2a at a given temperature, it becomes easy to control the temperature of the thermoplastic material 92 and the other thermoplastic material 93 at the press-forming.

Further, in the configuration using the first holder 1a, since it is possible to keep the upper mold 3a and the lower mold 2a at the given temperature, it is possible to heat the upper mold 3a and the lower mold 2a to a given temperature simultaneously with the start of press-forming. Therefore, it is possible to weld the thermoplastic material 92 and the other thermoplastic material 93 to each other at the welded portion 942, before the portion of the wire 91 or the periphery of the portion of the wire 91 becomes a high temperature by the transferred heat.

In addition, it is possible to plastically deform only the surface portion of the main body portion 941 at the given temperature and melt the binder material only in the surface portion. Therefore, in the main body portion 941, only in the surface portion, the thermoplastic material 92 and the other thermoplastic material 93 can be plastically deformed and the binder material is allowed to permeate into between the base fibers or the core fibers. Therefore, after cooling, only the surface portion is hardened and the central portion is kept in the state before the press-forming. Therefore, the hardened portion has a function of maintaining the portion of the first wire harness 9a in a given shape and also has the function as a protector. Further, the portion that is not hardened in the central portion of the main body portion 941 functions as a soundproof material or a shock-absorbing material for the portion of the wire 91.

Moreover, in the configuration of using the first holder 1a, it is possible to prevent unexpected (or undesired) deformation from being generated while the manufactured first wire harness 9a decreases to the other given temperature or less when or after being removed from the lower mold 2a. That is, in the first wire harness 9a right after being press-formed by the upper mold 3a and the lower mold 2a, at least the surface portions of the thermoplastic material 92 and the other thermoplastic material 93 are at a high temperature (= a temperature where plastic deformation is caused by thermoplasticity). In the configuration of not using the first holder 1a, it needs to hold wire harness 9a according to the first embodiment of the present invention when removing it from the lower mold 2a after the press-forming. Further, in this case, the held portion and the periphery thereof may be deformed, in the thermoplastic material 92 and/or the other thermoplastic material 93. Further, when being removed, the first wire harness 9a may be bent by its own weight. Further, deformation may be generated while the temperature decreases to the other given temperature or less after it is removed from the lower mold 2a.

In contrast, according to the method of manufacturing a wire harness of the first embodiment of the present invention, the portion of the press-formed first wire harness 9a can be removed from the lower mold 2a while being disposed on the first holder 1a. Further, the portion of the first wire harness 9a removed from the lower mold 2a can be cooled while being disposed on the first holder 1a.

That is, since it needs only to remove the first wire harness 9a from the lower mold 2a while holding the first holder 1a, it does not directly come in contact with the first wire harness 9a. Further, since the first wire harness 9a is held by the first holder 1a, it can be removed from the lower mold while maintaining the press-formed shape. Further, it can be cooled while being disposed on the first holder 1a. Therefore, it is possible to prevent unexpected (or undesired) deformation from being generated in the thermoplastic material 92 and the other thermoplastic material 93 after the press-forming.

Further, it may be possible to use a configuration of cooling then removing the upper mold and the lower mold in order to prevent unintended deformation from being generated after the press-forming. However, in this configuration, since it takes time to cool the upper mold and the lower mold, the time for manufacturing the wire harness increases. Further, since it is required to heat and cool the upper mold and the lower mold in every press-forming, the problems described above occur.

In addition, it is possible to reduce the work cycle when manufacturing the first wire harness 9a in large quantities by preparing a plurality of first holders 1a. For example, when three first holders 1a are prepared, the following work becomes possible.

The thermoplastic material 92, the portion of the wire 91, and the other thermoplastic material 93 disposed on the first order of the first holder 1a are press-formed by the upper mold 3a and the lower mold 2a. In this process, a work of disposing the thermoplastic material 92, wire 91, and the other thermoplastic material 93 on the second order of the first holder 1a is simultaneously performed.

Cooling is performed, after the press-forming of the thermoplastic material 92, the portion of the wire 91, and the other thermoplastic material 93 disposed on the first order of the first holder 1a has finished. In this process, the thermoplastic material 92, the portion of the wire 91, and the other thermoplastic material 93 disposed on the second order of the first holder 1a are simultaneously press-formed by the upper mold 3a and the lower mold 2a. Further, simultaneously, a work of disposing the thermoplastic material 92, the portion of the wire 91, and the other thermoplastic material 93 on the third order of the first holder 1a is performed.

Then, cooling is performed, after the press-forming of the thermoplastic material 92, the portion of the wire 91, and the other thermoplastic material 93 disposed on the second order of the first holder 1a is completed. In this process, the thermoplastic material 92, the portion of the wire 91, and the other thermoplastic material 93 disposed on the third order of the first holder 1a are press-formed by the upper mold 3a and the lower mold 2a. Simultaneously, a work of disposing the thermoplastic material 92, wire 91, and the other thermoplastic material 93 on the first order of the first holder 1a (in an empty state with manufactured wire harness 9a according to the first embodiment of the present invention removed after the cooling) is performed. Thereafter, such processes are repeated.

As described above, since the upper mold 3a and the lower mold 2a are kept at a given temperature and the plurality of first holders 1a are used, it is possible to simultaneously perform the works of disposing the thermoplastic material 92, the portion of the wire 91, and the other thermoplastic material 93 on the first holder 1a, press-forming, and cooling. Therefore, it is possible to reduce the work cycle and the time for manufacturing in mass production.

Further, in the method of manufacturing a wire harness according to the first embodiment of the present invention, although the guide pins 14 are formed at the first holder 1a, the guide pins may be formed at the lower mold 2a. Specifically, the guide pins protruding upward are formed at the third pressing portion 23 of the lower mold 2a and through-holes where the guide pins can be inserted are formed at the sides 13 of the first holder 1a. The same operational effect as above can also be shown in this configuration.

Next, manufacturing a wire harness according to the second embodiment of the present invention is described. Further, differences from the method of manufacturing a wire harness according to the first embodiment of the present invention are mainly described and the description of the same configurations may not be provided.

In the method of manufacturing a wire harness according to the second embodiment of the present invention, an upper mold 3b, a lower mold 2a, a first holder 1a, and a second holder 4b are used. The lower mold 2a and the first holder 1a have the same configurations as those used in the method of manufacturing a wire harness according to the first embodiment of the present invention. Therefore, the description thereof is not provided.

FIG. 8 is an external perspective view schematically showing the configurations of the upper mold 3b and the second holder 4b that are used in the method of manufacturing a wire harness according to the second embodiment of the present invention. In FIG 8, the upper side in the figure is the side opposite to the lower mold 2a. For the convenience of description, the upper side in FIG. 8 is the lower side of the upper mold 3b and the second holder 4b and the lower side in FIG. 8 is the upper side of the upper mold 3b and the second holder 4b.

The second holder 4b is a member having a function of press-forming the thermoplastic material 92 or the other thermoplastic material 93 in given shapes or a function of maintaining a portion of the manufactured first wire harness 9a in a given shape, in the process of manufacturing the first wire harness 9a.

A groove-shaped recessed portion (the portion composed of the sides 43 and a bottom 42) which can accommodate a portion of a wire 91 (in other words, for forming a main body portion 941) is formed at the lower side of the second holder 4b. Further, a pressing portion 41 for pressing the thermoplastic material 92 and the other thermoplastic material 93 (in other words, for forming a welded portion 942) is formed outside the groove-shaped recessed portion. That is, thin and long the bottom 42 that extends along the axial line of wire harness 9a according to the first embodiment of the present invention, the sides 43 formed at both sides of the bottom 42, and pressing portions 41 formed at both outsides of the sides 43 are further formed.

Further, the guide pin avoiding holes 44 through which the front-ends of the guide pins 14 of the first holder 1a can pass when being opposite to the first holder 1a are formed at the sides 43. The guide pin avoiding holes 44 are through-holes. The position or number of the guide pin avoiding holes 44 is determined in accordance with the position or number of the guide pins 14 of the first holder 1a.

The second holder 4b is made of a material having high heat conductivity and has a small amount of heat accumulation (that is, easily following a change in the environmental temperature). In particular, it has a configuration that makes it easy to transfer heat upward/downward. For example, it is formed by performing sheet metal machining on a thin metal plate.

The upper side shape of the second holder 4b is not particularly limited. For example, when the second holder 4b is formed by sheet metal machining, a protrusion corresponding to the groove-shaped recessed portion is formed at the upper side of the second holder 4b.

The upper mold 3b is a member that can press and heat the thermoplastic material 92 and the other thermoplastic material 93, together with the lower mold 2a. Further, the thermoplastic material 92 and the other thermoplastic material 93 may be formed in a given cross-sectional shape, and the thermoplastic material 92 and the other thermoplastic material 93 may be welded by using the upper mold 3b and the lower mold 2a. A groove having a given cross-sectional shape is formed on the lower side surface (upper surface in FIG. 3) of the upper mold 3b. The center line of the groove is formed according to the shape of the center line of wire harness 9a according to the first embodiment of the present invention. A curved shape having a certain curvature is shown in FIG. 8.

The cross-section of the bottom of the groove is formed in substantially the same shape as the cross-sectional shape of the upper side surface of the second holder 4b. That is, the bottom of the groove is shaped such that the upper side surface of the second holder 4b can be in contact with substantially the entire surface when the second holder 4b is fitted. Specifically, when the second holder 4b is formed of a thin plate member, a first pressing portion 31 that is in contact with the upper side surface of the pressing portion 41 of the second holder 4b, a second pressing portion 32 that is in contact with the upper side surface of the bottom 42, and a third pressing portion 33 that is in contact with the upper side surfaces of the sides 43 are formed on the bottom of the groove. Guide pin avoiding holes 35 are formed at certain positions through the third pressing portion 33. Further, a shear-stepped portion 34 for trimming the thermoplastic material 92 and the other thermoplastic material 93 is formed at the sides of the groove (= the outside stepped surface of the first pressing portion 31).

The upper mold 3b includes a heater, which is not shown. Further, the first pressing portion 31, the second pressing portion 32, and the third pressing portion 33 are maintained at a given temperature by the heater. The given temperature is the same as that of the lower mold 2a. Further, the heater may also be the same heater of the lower mold 2a. Therefore, the description thereof is not provided.

Further, the first holder 1a is disposed on the lower mold 2a and the second holder 4b is inserted in the groove of the upper mold 3b, and in this state, the upper mold 3b and the lower mold 2a are bonded, such that the first pressing portion 21, the second pressing portion 22, the third pressing portion 23, and the portion where the shearing step-surface 24 is formed, in the lower mold 2a, can be fitted in the groove (= a portion fitted in the shearing step-surface 34) of the upper mold 3b. Further, the front-ends of the guide pins 14 of the first holder 1a can be inserted into the guide pin avoiding holes 35 of the upper mold 3b through the guide pin avoiding holes 44 of the second holder 4b. Accordingly, the lower mold 2a, the first holder 1a disposed on the lower mold 2a, the upper mold 3a, and the second holder 4b inserted in the groove of the upper mold 3a can be disposed close to a certain distance.

When the first pressing portion 21, the second pressing portion 22, the third pressing portion 23, and the portion where the shearing step-surface 24 is formed, in the lower mold 2a, are fitted in the groove (= a portion fitted in the shearing step-surface 34) of the upper mold 3b, the upper side surface of the pressing portion 11 of the first holder 1a and the lower side surface of the pressing portion 41 of the second holder 4b are opposite to each other with a gap. Similarly, the upper side surface of the bottom 12 of the first holder 1a and the lower side surface of the bottom 42 of the second holder 4b are opposite to each other with a gap, while the upper side surfaces of the sides 13 of the first holder 1a and the lower side surfaces of the sides 43 of the second holder 4b are opposite to each other with a gap.

Further, the cross-sectional shape of the space surrounded by the upper side surface of the pressing portion 11, the upper side surface of the bottom 12 and the upper side surfaces of the sides 13 of the first holder 1a, and the lower side surface of the pressing portion 41, the lower side surface of the bottom 42 and the lower side surfaces of the sides 43 of the second holder 4b, and the shearing step-surface 34 of the upper mold 3b becomes the cross-sectional shape of the wire harness 9a according to the first embodiment of the present invention. In this state, the distance between the upper side surface of the pressing portion 11 of the first holder 1a and the lower side surface of the pressing portion 41 of the second holder 4b becomes smaller than the distance between the upper side surface of the bottom 12 of the first holder 1a and the lower side surface of the bottom 42 of the second holder 4b.

In addition, the shearing step-surface 24 of the lower mold 2a and the shearing step-surface 34 of the upper mold 3b are in contact with or opposite to each other with a small gap.

Moreover, the front-ends of the guide pins 14 of the first holder 1a can be inserted in guide pin avoiding holes 44 formed at the second holder 4b and the guide pin avoiding holes 35 formed at the upper mold 3b. Therefore, it is possible to move the first holder 1a disposed on the lower mold 2a and the upper mold 3b with the second holder 4b inserted, to be close to a certain distance without being interfered by the guide pins 14.

A method of manufacturing a wire harness according to the second embodiment of the present invention is as follows. FIGS. 9 to 12 are sectional views schematically showing processes of the method of manufacturing a wire harness according to the second embodiment of the present invention, respectively. Specifically, FIG. 9 is a view showing when the thermoplastic material 92, a portion of the wire 91, and the other thermoplastic material 93 are disposed between the first holder 1a and the second holder 4b. FIG. 10 is a view showing when the first holder 1a and the second holder 4b where the thermoplastic material 92, the portion of the wire 91, and the other thermoplastic material 93 are disposed therebetween are disposed on the lower mold 2a. FIG. 11 is a view showing when the thermoplastic material 92 and the other thermoplastic material 93 are pressed by the upper mold 3b and the lower mold 2a. FIG 12 is a view showing when the portion of the manufactured first wire harness 9a is removed from the upper mold 3b and the lower mold 2a while being fitted between the second holder 4b and the first holder 1a.

First, as shown in FIG 9, the thermoplastic material 92 is disposed at the upper side of the first holder 1a. Specifically, the guide pins 14 protrude through the thermoplastic material 92. In this state, the portion of the wire 91 is disposed on the thermoplastic material 92. The configuration in which the portion of the wire 91 can be positioned and arranged by the guide pins 14 and the configuration in which the portion of the disposed wire 91 does not move from the position are the same as the method of manufacturing a wire harness according to the first embodiment of the present invention. Then, the other thermoplastic material 93 is disposed on the portion of the wire 91. In addition, the second holder 4b is disposed on the other thermoplastic material 93.

As described above, the portion of the wire 91 is disposed between the upper side of the first holder 1a and the lower side of the second holder 4b, with the portion of the wire 91 being fitted between the thermoplastic material 92 and the other thermoplastic material 93.

Further, the length of the guide pins 14 of the first holder 1a used in the method of manufacturing a wire harness according to the second embodiment of the present invention (the protrusion length from the upper side surface of the pressing portion 11) may be the length described in the method of manufacturing a wire harness according to the first embodiment of the present invention, but is preferably larger than (thickness of the thermoplastic material 92) + (diameter of the wire 91 (or outer diameter of the bundle of wires)) + (thickness of the other thermoplastic material 93) + (height of the second holder 4b). According to this dimension, the front-ends of the guide pins 14 protrude through the other thermoplastic material 93. Further, the protruding front-ends of the guide pins 14 can be inserted into the guide pin avoiding holes 44 of the second holder 4b. According to this configuration, it becomes easy to locate the second holder 4b. Further, it is possible to prevent deviation of position of the second holder 4b because the second holder 4b is kept positioned by the guide pins 14.

Next, as shown in FIG. 10, the first holder 1a where the thermoplastic material 92, the wire 91, the other thermoplastic material 93, and the second holder 4b are disposed thereon is disposed on the lower mold 2a by being inserted between the upper mold 3b and the lower mold 2a.

Further, as shown in FIG 11, the upper mold 3b and the lower mold 2a are moved close. Specifically, the second holder 4b is pressed by the upper mold 3b and the first holder 1a is pressed by the lower mold 2a. And, the distance between the upper side surface of the pressing portion 11 of the first holder 1a and the lower side surface of the pressing portion 41 of the second holder 4b becomes smaller than the sum of the thickness of the thermoplastic material 92 before press-formed and the thickness of the other thermoplastic material 93 before press-formed. Therefore, the thermoplastic material 92 and the other thermoplastic material 93 are press-formed by moving the first holder 1a and the second holder 4b closer. As described above, the front-ends of the guide pins 14 of the first holder 1a stick in the guide pin avoiding holes 44 of the second holder 4b and the guide pin avoiding holes 35 of the upper mold 3b. Therefore, it is possible to move the first holder 1a and the lower mold 2a, and the second holder 4b and the upper mold 3b, to be close at a certain distance without being interfered by the guide pins 14. Further, the shearing step-surface 24 of the lower mold 2a and the shearing step-surface 34 of the upper mold 3b are in contact with each other (or opposite to each other with a small gap).

In addition, this state is maintained for a given time. That is, the press-forming is performed only for the given time. The given time is the same as the given time in the method of manufacturing a wire harness according to the first embodiment of the present invention.

Moreover, this process is different from the method of manufacturing a wire harness according to the first embodiment of the present invention only in that the thermoplastic material 92 and the other thermoplastic material 93 is directly pressed by the upper mold 3a or by the second holder 4b. That is, the aspects of plastic deformation of the thermoplastic material 92 and the other thermoplastic material 93 or the aspect of melting of the binder material are the same as those of the method of manufacturing a wire harness according to the first embodiment of the present invention.

Further, with the state shown in FIG. 11 maintained, in the thermoplastic material 92 and the other thermoplastic material 93, the portion fitted between the upper side surface of the pressing portion 11 of the first holder 1a and the lower side surface of the pressing portion 41 of the second holder 4b is pressed, compressed, and deformed. Further, the portion is plastically deformed by the heat generated by the heaters of the upper mold 3b and the lower mold 2a, and the binder material of the binder fiber is melted throughout the entire vertical length of the portion and permeates between the base fibers or the core fibers. Further, the molten binder material spreads even on the contacting surfaces of the thermoplastic material 92 and the other thermoplastic material 93.

In addition, in the thermoplastic material 92, the surface portions in contact with the upper side surface of bottom portion 12 of the first holder 1a or the upper side surfaces of the sides 13 of the first holder 1a are also pressed, heated, and plastically deformed. Similarly, in the other thermoplastic material 93, the surface portions of the portion in contact with the lower side surface of the bottom 42 of the second holder 4b and the lower side surfaces of the sides 43 of the second holder 4b are also depressed, heated, and plastically deformed. Accordingly, the cross-sections of the thermoplastic material 92 and the other thermoplastic material 93 are formed entirely in the substantially same as the shape of the space formed between the first holder 1a and the second holder 4b. Further, in the thermoplastic material 92, the binder material in the surface portion of the portion in contact with the upper side surface of the bottom 12 of the first holder 1a and the upper side surfaces of the sides 13 of the first holder 1a is melted by heat, spreads on the surface portion, and permeates between the base fibers or the core fibers. Similarly, in the other thermoplastic material 93, the binder material in the surface portion of the portion being in contact with the lower side surface of the bottom 42 of the second holder 4b or the lower side surfaces of the sides 43 of the second holder 4b is melted by heat, spreads on the surface portion, and permeates between the base fibers or the core fibers.

Moreover, the heat generated from the lower mold 2a is transferred to the thermoplastic material 92 or the other thermoplastic material 93 through the first holder 1a. Meanwhile, the heat generated from the upper mold 3b is transferred to the thermoplastic material 92 or the other thermoplastic material 93 through the second holder 4b. As described above, since the first holder 1a is made of a material having high heat conductivity and easy to vertically transfer the heat, the heat generated from the lower mold 2a is easily transferred to the thermoplastic material 92 or the other thermoplastic material 93. Similarly, since the second holder 4b is made of a material having high heat conductivity and easy to vertically transfer the heat, the heat generated from the upper mold 3b is easily transferred to the thermoplastic material 92 or the other thermoplastic material 93. Therefore, the given time needs not to increase.

Further, in the thermoplastic material 92 and the other thermoplastic material 93, the portions 92' and 93' protruding outside than the pressing portion 41 of the second holder 4b (= the first pressing portion 31 of the upper mold 3b) and the pressing portion 11 of the first holder 1a (= the first pressing portion 21 of the lower mold 2a) are separated by the shearing step-surface 34 of the upper mold 3b and the shearing step-surface 24 of the lower mold 2a. Therefore, the unnecessary portions of the thermoplastic material 92 and the other thermoplastic material 93 are removed (trimmed) in the press-forming by the upper mold 3 a and the lower mold 2a.

Next, as shown in FIG 12, after a given time passes, the upper mold 3a and the lower mold 2a are separated, and the press-formed thermoplastic material 92, wire 91, and the press-formed other thermoplastic material 93 (that is, the portion of the first wire harness 9a) are removed from the lower mold 2a while being fitted between the first holder 1a and the second holder 4b. Then, they are cooled in this state. In this process, it may be possible to prevent a change in dimension (particularly, an increase in dimension) between the second holder 4b and the first holder 1a by holding the second holder 4b and the first holder 1a with a clamp or the like. Further, the portion of the first wire harness 9a is removed from the second holder 4b and the first holder 1a after it becomes at the above another given temperature or less.

Further, the first holder 1a and the second holder 4b are made of materials having high heat conductivity and easy to vertically transfer heat. Therefore, the heat of the thermoplastic material 92 or the other thermoplastic material 93 is quickly dissipated to the outside through the first holder 1a and the second holder 4b. Further, when the first holder 1a and the second holder 4b are formed of a metal plate by sheet metal machining, the amount of accumulated heat is small. Accordingly, the temperature starts to drop when they are removed from the upper mold 3b or the lower mold 2a. Therefore, the thermoplastic material 92 or the other thermoplastic material 93 fitted between the first holder 1a and the second holder 4b is not kept heated by the heat of the first holder 1a or the second holder 4b after being removed from the lower mold 2a. As described above, since it is possible to prevent excessive heating, it becomes easy to control the properties of the thermoplastic material 92 and the other thermoplastic material 93.

The portion of the first wire harness 9a is manufactured by the processes described above. The portion of the first wire harness 9a manufactured by the method of manufacturing a wire harness according to the second embodiment of the present invention has substantially the same configuration as the portion of the first wire harness 9a manufactured by the method of manufacturing a wire harness according to the first embodiment of the present invention.

According to this configuration, it is possible to show the same operational effect as the method of manufacturing a wire harness according to the first embodiment of the present invention. Further, it is possible to show the following operational effects.

When the pressure applied to the press-formed thermoplastic material 92 and the other thermoplastic material 93 is removed by separating the upper mold 3b and the lower mold 2a after performing the press-forming with the upper mold 3b and the lower mold 2a, the thermoplastic material 92 and the other thermoplastic material 93 include portions that is low in temperature and has small plastic deformation and large elastic deformation when heating the main body portion 941, such that they may return to the initial shapes (that is, a phenomenon corresponding to spring back in plastic machining of metal may occur). Therefore, the cross-sectional shapes or the dimensions of the press-formed thermoplastic material 92 and the other thermoplastic material 93 may change.

According to the method of manufacturing a wire harness of the second embodiment of the present invention, it is possible to keep applying a pressing force to the thermoplastic material 92 and the other thermoplastic material 93 by the own weight of the second holder 4b until the temperature becomes lower than another given temperature after they are taken out from the upper mold 3b and the lower mold 2a. Therefore, the thermoplastic material 92 and the other thermoplastic material 93 are prevented from returning to the initial shapes. When the portion of the first wire harness 9a becomes another given temperature or less, the binder material is solidified and the shape is fixed. As described above, it is possible to improve accuracy in the shape or the dimension of the first wire harness 9a.

Further, after the press-forming, when the pressing force is removed while the temperature of the thermoplastic material 92 and the other thermoplastic material 93 is high (at a temperature where they are plastically deformed), portions having low temperature, small plastic deformation, and large elastic deformation when the main body portion 941 is heated are also included, such that the bonding portion may be peeled by spring back, and welding of the welded portion 942 of the thermoplastic material 92 and the other thermoplastic material 93 may weaken. Therefore, it is possible to improve welding strength at the welded portion 942 by keeping applying the own weight of the second holder 4b until the thermoplastic material 92 and the other thermoplastic material 93 becomes another given temperature or less (that is, until the binder material is solidified).

In addition, it can be ensured that the deformation of the thermoplastic material 92 and the other thermoplastic material 93 is prevented from occurring by holding the second holder 4b and the first holder 1a by the clamp, or the like. Similarly, it is possible to improve welding strength at the welded portion 942.

Moreover, after press-forming, it is possible to prevent the thermoplastic material 92 from sticking to the lower mold 2a and the other thermoplastic material 93 from sticking to the upper mold 3b, when the upper mold 3b and the lower mold 2a are separated. Therefore, it is possible to prevent the thermoplastic material 92 and the other thermoplastic material 93 from separating.

Next, a method of manufacturing a wire harness according to the third embodiment of the present invention is described. The method of manufacturing a wire harness according to the third embodiment of the present invention is a method that makes it possible to improve welding strength of the thermoplastic material 92 and the other thermoplastic material 93. Further, the mechanism that is used in the method of manufacturing a wire harness according to the third embodiment of the present invention is the same as the mechanism that is used in the method of manufacturing a wire harness according to the first embodiment of the present invention or the method of manufacturing a wire harness according to the second embodiment of the present invention. This embodiment exemplifies a configuration that uses the mechanism used in the method of manufacturing a wire harness according to the second embodiment of the present invention. Accordingly, the common parts as those of the method of manufacturing a wire harness according to the second embodiment of the present invention may not be described. Further, a wire harness that is manufactured in the method of manufacturing a wire harness according to the third embodiment of the present invention is referred to as a second wire harness 9b.

FIGS. 13 to 16 are sectional views schematically showing processes of the method of manufacturing a wire harness according to the third embodiment of the present invention, respectively. Specifically, FIG. 13 is a view showing when the thermoplastic material 92, a portion of the wire 91, the other thermoplastic material 93, and a reinforcing thermoplastic material 95 are disposed between the second holder 4b and the first holder 1a. FIG 14 is a view showing when the second holder 4b and the first holder 1a where the thermoplastic material 92, the portion of the wire 91, the other thermoplastic material 93, and the reinforcing thermoplastic material 95 are disposed are disposed therebetween on the lower mold 2a. FIG 15 is a view showing when the thermoplastic material 92, the portion of the wire 91, the other thermoplastic material 93, and the reinforcing thermoplastic material 95 are pressed by the upper mold 3b and the lower mold 2a. FIG. 16 is a view showing when the portion of the manufactured second wire harness 9b is removed from the upper mold 3b and the lower mold 2a while being interposed between the second holder 4b and the first holder 1a.

First, as shown in FIG. 13, the thermoplastic material 92 is disposed on the first holder 1a. In this process, as shown in FIG. 13, the guide pins 14 protrude through the thermoplastic material 92. Further, in this state, the portion of the wire 91 is disposed on the thermoplastic material 92. In addition, the reinforcing thermoplastic material 95 is disposed at a position corresponding to the pressing portion 11 of the first holder 1a. Moreover, the other thermoplastic material 93 is further disposed thereon, with wire 91 and the reinforcing thermoplastic material 95 disposed. That is, the portion of the wire 91 and the reinforcing thermoplastic material 95 are fitted between the thermoplastic material 92 and the other thermoplastic material 93. Accordingly, at least a portion of the reinforcing thermoplastic material 95 is positioned between the pressing portion 11 of the first holder 1a and the pressing portion 41 of the second holder 4b.

Further, the reinforcing thermoplastic material 95 is a rod-shaped member that is made of the same material as the thermoplastic material 92 and the other thermoplastic material 93 and has a given cross-sectional shape. The cross-section is substantially a rectangle in FIG 13.

Next, as shown in FIG 14, the first holder 1a where the thermoplastic material 92, the portion of the wire 91, the reinforcing thermoplastic material 95, the other thermoplastic material 93, and the second holder 4b are disposed thereon is inserted into between the upper mold 3b and the lower mold 2a and disposed on the lower mold 2a.

Further, as shown in FIG. 15, the upper mold 3b and the lower mold 2a are moved close. Specifically, the second holder 4b is pressed by the upper mold 3b and the first holder 1a is pressed by the lower mold 2a. In addition, the second holder 4b and the first holder 1a are moved closer. And, the distance between the upper side surface of the pressing portion 11 of the first holder 1a and the lower side surface of the pressing portion 41 of the second holder 4b becomes smaller than the sum of the thickness of the thermoplastic material 92 before press-formed, the thickness of the other thermoplastic material 93 before press-formed, and the thickness of the reinforcing thermoplastic material 95.

In addition, this state (state shown in FIG. 15) is maintained for a given time. The given time is the same as the given time in the method of manufacturing a wire harness according to the first embodiment of the present invention.

With the state maintained, in the thermoplastic material 92, the reinforcing thermoplastic material 95, and the other thermoplastic material 93, the portion (= portion which becomes the welded portion 942) fitted between the upper side surface of the pressing portion 11 of the first holder 1a and the lower side surface of the pressing portion 41 of the second holder 4b is pressed, compressed and deformed. Further, the portion is heated at the given temperature and plastically deformed by heat generated from the heaters of the upper mold 3b and the lower mold 2a.

Further, when the thermoplastic material 92, the other thermoplastic material 93, and the reinforcing thermoplastic material 95 are made of the non-woven fabric, the binder materials of the thermoplastic material 92, the other thermoplastic material 93, and the reinforcing thermoplastic material 95 are melted throughout the thickness direction of the welded portion 942 and permeate throughout the portion. Further, the molten binder materials also spread on the contacting surfaces between the thermoplastic material 92 and the reinforcing thermoplastic material 95 and the contacting surfaces between the reinforcing thermoplastic material 95 and the other thermoplastic material 93. In addition, when the thermoplastic material 92, the other thermoplastic material 93, and the reinforcing thermoplastic material 95 are made of the foamed body, the thermoplastic material 92, the other thermoplastic material 93, and the reinforcing thermoplastic material 95 are melted throughout the thickness direction of the welded portion 942.

In addition, in the thermoplastic material 92, the reinforcing thermoplastic material 95, and the other thermoplastic material 93, the portions outside the pressing portion 41 of the second holder 4b and the first pressing portion 31 of the upper mold 3b, and the portions 92', 93', and 95' protruding outside than the pressing portion 11 of the first holder 1a and pressing portion 21 of the lower mold 2a are separated by the shearing step-surface 34 of the upper mold 3b and the shearing step-surface 24 of the lower mold 2a. As described above, the unnecessary portions of the thermoplastic material 92, the reinforcing thermoplastic material 95, and the other thermoplastic material 93 are removed (trimmed) in the press-forming by the upper mold 3b and the lower mold 2a.

Moreover, the aspects of deformation of the thermoplastic material 92 and the other thermoplastic material 93 or the aspect of melting of the binder material in the main body portion 941 are the same as those of the method of manufacturing a wire harness according to the second embodiment of the present invention. Therefore, the description is not provided.

Next, as shown in FIG 16, the upper mold 3b and the lower mold 2a are separated, after the given time elapses. Further, the press-formed thermoplastic material 92, the portion of the wire 91, the press-formed other thermoplastic material 93, and the press-formed reinforcing thermoplastic material 95 (that is, the portion of the second wire harness 9b) are removed from the lower mold 2a while being fitted between the first holder 1a and the second holder 4b. Further, they are cooled in this state. Further, the portion of the second wire harness 9b is removed from the second holder 4b and the first holder 1a after it becomes at the above another given temperature or less.

Accordingly, the second wire harness 9b is manufactured.

According to the method of manufacturing a wire harness of the third embodiment of the present invention, it is possible to show the same operational effect as the method of manufacturing a wire harness of the second embodiment of the present invention. Further, since the welded portion 942 is formed by the thermoplastic material 92, the reinforcing thermoplastic material 95, and the other thermoplastic material 93, density of the welded portion 942 increases and the welding strength is improved. Therefore, it is possible to improve the welding strength of the thermoplastic material 92 and the other thermoplastic material 93. Further, although a configuration of using the second holder 4b is described in the method of manufacturing a wire harness of the third embodiment of the present invention, the second holder 4b may not be used. That is, a method that is substantially the same as the method of manufacturing a wire harness according to the first embodiment of the present invention may be possible.

Next, a method of manufacturing a wire harness according to the fourth embodiment of the present invention is described. FIGS. 17 and 18 are external perspective views schematically showing the configuration of a mechanism used in the method of manufacturing a wire harness according to the fourth embodiment of the present invention. Specifically, FIG. 17 is an external perspective view schematically showing the configuration of the first holder 1c and the lower mold 2c and FIG. 18 is an external perspective view schematically showing the configuration of the second holder 4c and the upper mold 3c. Further, the common parts as those of the mechanism used in the method of manufacturing a wire harness according to the second embodiment of the present invention are given the same reference numerals and the description may not be provided. Further, for convenience of explanation, a wire harness that is manufactured according to the method of manufacturing a wire harness according to the fourth embodiment of the present invention is referred to as a third wire harness 9c.

As shown in FIG 17, a first pressing portion 21, a second pressing portion 22, a third pressing portion 23, and the shearing step-surface 24 are formed at a lower mold 2c. This configuration is the same as the configuration of the lower mold 2a used in the method of manufacturing a wire harness according to the second embodiment of the present invention. Further, pressing protrusions 25 are formed at the first pressing portion 21. The pressing protrusions 25 are members protruding upward. The shape of the pressing protrusion 25 is not particularly limited, but, for example, may be formed in a pin shape or a column shape. Further, it is not necessary to be vertically long, but may be transversely long. The pressing protrusion 25 may be formed at the first pressing portion 21 and the number thereof or the position on the first pressing portion 21 is not particularly limited.

Further, pressing protrusion avoiding holes 15 are formed at the pressing portion 11 of the first holder 1c. The ressing protrusion avoiding holes 15 are vertical through-holes. For the other configuration, the configuration which is the same as that of the first holder 1a used in the method of manufacturing a wire harness according to the second embodiment of the present invention may be used. The pressing protrusion avoiding hole 15 is formed depending on the position or number of the pressing protrusion 25 of the lower mold 2c. That is, when the first holder 1c is disposed on the lower mold 2c, the pressing protrusion 25 of the lower mold 2c is formed to pass through the pressing protrusion avoiding hole 15 of the first holder 1c.

As shown in FIG 18, a first pressing portion 31, a second pressing portion 32, a third pressing portion 33, and the shearing step-surface 34 are formed at the upper mold 3c. The guide pin avoiding holes 35 are formed at the third pressing portion 33. Further, the shearing step-surface 34 is formed at both sides of the first pressing portion 31. For the configuration, the configuration which is the same as that of the upper mold 3b used in the method of manufacturing a wire harness according to the second embodiment of the present invention may be used. Further, an avoiding hole 36 is formed at the first pressing portion 31.

An avoiding hole 45 is formed at the pressing portion 41 of the second holder 4c. The avoiding hole 45 is a vertical through-hole. For the other configuration, the configuration which is the same as that of the second holder 4b used in the method of manufacturing a wire harness according to the fourth embodiment of the present invention may be used.

The avoiding hole 36 of the upper mold 3c and the avoiding hole 45 of the second holder 4c are formed depending on the position or number of the pressing protrusion 25 of the lower mold 2c. That is, when the upper mold 3c and the lower mold 2c are positioned to be opposite to each other, with the second holder 4c fitted in the upper mold 3c, the position of the pressing protrusion 25 of the lower mold 2c and the position of the avoiding hole 36 of the upper mold 3c and the avoiding hole 45 of the second holder 4c approximately agree.

A method of manufacturing a wire harness according to the fourth embodiment of the present invention is as follows. FIGS. 19 to 21 are sectional views schematically showing processes of the method of manufacturing a wire harness according to the fourth embodiment of the present invention. Specifically, FIG. 19 is a view showing when the second holder 4c and the first holder 1c where the thermoplastic material 92, a portion of the wire 91, and the other thermoplastic material 93 are disposed therebetween are disposed on the lower mold 2c. FIG. 20 is a view showing when the thermoplastic material 92, the portion of the wire 91, and the other thermoplastic material 93 are pressed by the upper mold 3c and the lower mold 2c. FIG 21 is a view showing when the portion of the manufactured third wire harness 9c is removed from the upper mold 3c and the lower mold 2c while being interposed between the second holder 4c and the first holder 1c. Further, the common parts as those of the method of manufacturing a wire harness according to the second embodiment of the present invention may not be described.

First, as shown in FIG. 19, the thermoplastic material 92 is disposed on the first holder 1c. Further, in this state, the portion of the wire 91 is disposed on the thermoplastic material 92. Further, the other thermoplastic material 93 is further disposed above the portion of the wire 91 that has been disposed. Further, the second holder 4c is disposed on the other thermoplastic material 93. As described above, the portion of the wire 91 is disposed on the first holder 1c and the second holder 4c while being fitted in between the thermoplastic material 92 and the other thermoplastic material 93.

Next, the first holder 1c where the thermoplastic material 92, the portion of the wire 91, the other thermoplastic material 93, and the second holder 4c are disposed is inserted between the upper mold 3c and the lower mold 2c and disposed on the lower mold 2c. Further, as shown in FIG. 20, the upper mold 3c and the lower mold 2c are moved close. Specifically, the second holder 4c is pressed by the upper mold 3c and the first holder 1c is pressed by the lower mold 2c. Further, the second holder 4c and the first holder 1c are moved closer, such that the distance between the lower side surface of the pressing portion 41 of the second holder 4c and the lower side surface of the pressing portion 11 of the first holder 1c becomes smaller than the sum of the thickness of the thermoplastic material 92 before press-formed and the thickness of the other thermoplastic material 93 before press-formed.

Further, this state is maintained for a given time. The given time described herein is the same as the given time in the method of manufacturing a wire harness according to the first embodiment of the present invention. The aspects of deformation of the thermoplastic material 92 and the other thermoplastic material 93 therebetween are substantially the same as the process of the method of manufacturing a wire harness according to the second embodiment of the present invention. Therefore, the description is not provided.

In this configuration, the pressing protrusion 25 of the lower mold 2c bites into the thermoplastic material 92 through the pressing protrusion avoiding hole 15 of the first holder 1c. Further, the thermoplastic material 92 pressed by the pressing protrusion 25 bites into the other thermoplastic material 93. Further, the other thermoplastic material 93 and the thermoplastic material 92 pressed by the pressing protrusion 25 enter the avoiding hole 45 of the second holder 4c and the avoiding hole 36 of the upper mold 3c.

Next, as shown in FIG 21, after a given time elapses, the upper mold 3c and the lower mold 2c are separated, and the press-formed thermoplastic material 92, the portion of the wire 91, and the press-formed other thermoplastic material 93 (that is, the portion of the third wire harness 9c) are removed from the lower mold 2c while being fitted between the second holder 4c and the first holder 1c. Further, they are cooled in this state. Further, the portion of the third wire harness 9c is removed from the second holder 4c and the first holder 1c after it becomes at the above another given temperature or less.

The third wire harness 9c is manufactured by the processes described above.

FIG. 22 is an external perspective view schematically showing the configuration of the portion of the third wire harness 9c. The third wire harness 9c has substantially the same configuration as the first wire harness 9a. However, in the welded portion 942, a protrusion 96 is formed at the thermoplastic material 92 and the other thermoplastic material 93 pressed by the pressing protrusion 25 of the lower mold 2c and filled in the avoiding hole 45 of the second holder 4c and the avoiding hole 36 of the upper mold 3c. Further, at the opposite side, a recessed portion by the pressing protrusion 25 of the lower mold 2c is formed (blocked and not shown in FIG. 22).

According to the method of manufacturing a wire harness of the fourth embodiment of the present invention, it is possible to show the same operational effect as the method of manufacturing a wire harness of the first embodiment of the present invention or the method of manufacturing a wire harness of the second embodiment of the present invention. In addition, since the thermoplastic material 92 pressed by the pressing protrusion 25 bites into the other thermoplastic material 93, welding strength between the thermoplastic material 92 and the other thermoplastic material 93 is improved at the cut portion. Further, although a configuration of using the second holder 4c is described (shown) in the method of manufacturing a wire harness according to the fourth embodiment of the present invention, the second holder 4c may not be used. That is, the method of manufacturing a wire harness according to the first embodiment of the present invention may be possible.

Next, a configuration that improves attachment strength of wire 91, the thermoplastic material 92, and the other thermoplastic material 93 is described. FIG 23 is a view schematically showing the cross-sectional structure of a wire harness 9d for improving the attachment strength. FIG. 24 is a view schematically showing the configuration of the portion of the wire 91 of the wire harness 9d, an attachment reinforcing member 99 attached to the portion of the wire 91, and a fastener 98, in which (a) is an exploded perspective view and (b) is an external perspective view of an assembled state.

As shown in FIGS. 23 and 24, the portion of the wire harness 9d has wire 91, the thermoplastic material 92, the other thermoplastic material 93, the attachment reinforcing member 99, and the fastener 98. As shown in FIG 23, the attachment reinforcing member 99 is an arched member having a substantially U-shaped cross-section and has a bottom 992 formed in the shape of the outer circumference of the portion of the wire 91 (for example, formed in an arc shape having substantially the same radius of curvature as the diameter of the wire) and side walls 991 stand on both sides of the bottom 992. Further, the tops of the side walls 991 have a prominence and depression as shown in FIG. 23 or 24.

The fastener 98 is a member for fixing the attachment reinforcing member 99 to wire 91 and the configuration thereof is not limited. For example, as shown in FIG. 23 or 24, it may be a ring-shaped member or a string-shaped member. Further, it may be a tie band. That is, it needs only to fix the attachment reinforcing member 99 to the portion of the wire 91 (make the attachment reinforcing member 99 difficult to move in the axial direction of the portion of the wire 91). Specifically, as shown in FIGS. 23 and 24, respectively, the fastener 98 is fitted between the side walls 991 of the attachment reinforcing member 99, and fixed to cover the outer circumference of the portion of the wire 91 by the fastener 98 from the outside of the bottom 992. Further, it may be possible to fix the attachment reinforcing member 99 to the portion of the wire 91 with an adhesive without using the fastener 98.

Further, for the portion of the wire 91 with the attachment reinforcing member 99 fixed, the wire harness 9d is manufactured by the method of manufacturing a wire harness according to any one of the embodiments of the present invention. Accordingly, as shown in FIG. 23, the prominence and depression formed on the tops of the side walls 991 of the attachment reinforcing member 99 bites into the thermoplastic material 92 and/or the other thermoplastic material 93. Therefore, even if an axial tensile force (a force pulling out the portion of the wire 91 from the thermoplastic material 92 and the other thermoplastic material 93) is applied to the portion of the wire 91, the portion of the wire 91 is prevented from axially moving by the attachment reinforcing member 99 cutting in the thermoplastic material 92 and/or the other thermoplastic material 93.

In addition, the configuration of the attachment reinforcing member 99 and the configuration of fixing the attachment reinforcing member 99 to the portion of the wire 91 are not limited to the above configurations. That is, the attachment reinforcing member 99 may be shaped to be able to cut into the thermoplastic material 92 and/or the other thermoplastic material 93 (for example, the configuration in which a protrusion or a prominence and depression is formed), and the attachment reinforcing member 99 may be fixed to the portion of the wire 91.

Next, a method of manufacturing a wire harness 9e with the portion of the wire 91 covered by a shield member 970 is described. FIG. 25 is a sectional view schematically showing the cross-sectional structure of the wire harness 9e with the portion of the wire 91 covered by the shield member 970. As shown in FIG. 25, the wire harness 9e includes wire 91, the shield member 970 that shields the portion of the wire 91, the thermoplastic material 92 and the other thermoplastic material 93 that cover the periphery of the portion of the wire 91 and the shield member 970, and a fastener 973.

As shown in FIG. 25, the configuration of the portion of the wire 91, the thermoplastic material 92, and the other thermoplastic material 93 is the same as those of wire harnesses 9a, 9b, 9c, 9d according to any one of the embodiments. The shield member 970 has a main body portion 971 covering the portion of the wire 91 and an extending portion 972 extending from the main body portion 971 and electrically coupled to the main body portion 971. A thin plate, a sheet, a tape, a braid, and a net which are made of a conductive material may be used for the shield member 970. A metal eyelet (ring-shaped metal) made of a conductive material may be used for the fastener 973.

The method of manufacturing the wire harness 9e having the configuration is as follows. First, the outside of the portion of the wire 91 is covered with the shield member 970. For example, it may be possible to wind an aluminum tape around the portion of the wire 91 and form the extending portion 972 by the aluminum tape.

Further, for the portion of the wire 91 covered with the shield member 970, the wire harness 9e is manufactured by the method of manufacturing a wire harness according to any one of the embodiments of the present invention. When the thermoplastic material 92 and the other thermoplastic material 93 (and the reinforcing thermoplastic material 95, if necessary) are press-formed, the extending portion of the shield member 970 is fitted between the thermoplastic material 92 and the other thermoplastic material 93. Further, when the reinforcing thermoplastic material 95 is used, the extending portion of the shield member 970 is fitted between the thermoplastic material 92 and the reinforcing thermoplastic material 95 or between the reinforcing thermoplastic material 95 and the other thermoplastic material 93. According to this configuration, it is possible to achieve a structure in which the extending portion 972 of the shield member 970 is embedded in the welded portion 942.

In addition, a through-hole is formed in the welded portion 942 and the extending portion 972 of the shield member 970 embedded in the welded portion 942 and the fastener 973 is mounted in the through-hole. Further, a protrusion may be formed at the upper mold or the lower mold and through-holes may be formed simultaneously when press-forming the thermoplastic material 92 and the other thermoplastic material 93 (and the reinforcing thermoplastic material 95, if necessary) by the protrusions. The wire harness 9e is manufactured by the processes described above.

When the fastener 973 is mounted in the through-hole, the extending portion 972 of the shield member 970 and the fastener 973 are in contact with each other and electrically conducted. Therefore, it is possible to ground the shield member 970 by grounding the fastener 973.

Next, a method of forming the portion of the wire harness manufactured by any one of the embodiments of the present invention in a certain shape (bending in a certain shape) will be described.

Since the thermoplastic material 92 and the other thermoplastic material 93 (and the reinforcing thermoplastic material 95) have thermoplasticity, it is possible to easily plastically deform them by heating at or more than the given temperature, and then it is possible to maintain the shape by cooling them.

FIGS. 26 and 27 are sectional views schematically showing a method of further bending the portion of the wire harnesses 9a, 9b, 9c, 9d, 9e (hereafter, given reference numeral "9") manufactured by the manufacturing method according to any one of the embodiments of the present invention. FIG 26 shows before a curvature process is performed and FIG. 27 shows when bending is performed. As shown in FIGS. 26 and 27, respectively, in bending, an upper mold 6a for bending and a lower mold 7a for bending are used. One of the upper mold 6a for bending and the lower mold 7a for bending has a protrusion and the other has a recessed portion. In FIGS. 26 and 27, the upper mold 6a for bending has a protrusion and the lower mold 7a for bending has a recessed portion. Further, the portion of the manufactured wire harness 9 is fitted between the protrusion of the upper mold 6a for bending and the recessed portion of the lower mold 7a for bending, and in this state, the portion of the wire harness 9 is bent in a given shape (in concave and convex shapes) by applying heat at the given temperature.

Further, the following configuration is used for the configuration of heating the portion of the wire harness 9.

1. Configuration in which the upper mold 6a for bending and the lower mold 7a for bending have a heater. According to this configuration, the portion of the wire harness 9 is fitted between the upper mold 6a for bending and the lower mold 7a for bending, and bending is performed with heating. Further, when the portion of the wire harness 9 is removed from the upper mold 6a for bending and the lower mold 7a for bending and then cooled, the shape of the portion of the wire harness 9 is fixed. As the heater, the same heater as the upper mold or the lower mold may be used.

2. Configuration in which the upper mold 6a for bending and the lower mold 7a for bending do not have a heater and the portion of the wire harness 9 is heated from the outside, with the portion of the wire harness 9 fitted between the upper mold 6a for bending and the lower mold 7a for bending. For example, the portion of the wire harness 9 is fitted between the upper mold 6a for bending and the lower mold 7a for bending, and in this state, the thermoplastic material 92 and the other thermoplastic material 93 are plastically deformed by spraying a gas (heated air or overheated vapor) at the given temperature to the portion of the wire harness 9. Thereafter, the portion of the wire harness 9 decreases in a temperature lower than the above another given temperature by stopping the spraying of the gas, and then is removed from the upper mold 6a for bending and the lower mold 7a for bending.

3. Configuration in which the upper mold 6a for bending and the lower mold 7a for bending do not have a heater, the thermoplastic material 92 and the other thermoplastic material 93 are press-formed, and then bending is performed until the temperature decreases lower than the above another given temperature. In the portion of the wire harness 9 right after being manufactured by the method of manufacturing a wire harness according to any one of the embodiments of the present invention, the thermoplastic material 92 and the other thermoplastic material 93 are at a high temperature higher (in a state having thermoplasticity). Therefore, before the thermoplastic material 92 and the other thermoplastic material 93 decreases lower than the above another given temperature, the portion of the wire harness 9 is cooled, between the upper mold 6a for bending and the lower mold 7a for bending. Accordingly, the shape of the portion of the wire harness 9 is fixed. According to this method, it is not required to reheat the thermoplastic material 92 and the other thermoplastic material 93. Therefore, it is possible to simplify the equipment for bending.

According to this configuration, it is possible to form (bend in a given shape) the portion of the wire harness 9 in a given shape, even after the thermoplastic material 92 and the other thermoplastic material 93 are press-formed. Therefore, it becomes easy to change the shape of the portion of the wire harness 9.

Further, when the portion of the wire harness 9 is bent, it may be possible to perform bending with the portion of the wire harness 9 in between a second holder 4e and a first holder 1e such that the other portion that is not bent is not deformed. FIGS. 28 and 29 are sectional views schematically showing the configuration for performing bending with the portion of the wire harness 9 in between second holder 4e and first holder 1e. FIG 28 shows before bending is performed and FIG 29 shows when bending is performed.

As shown in FIGS. 28 and 29, second holder 4e is divided at the portion where bending is performed and coupled by a hinge 49. Therefore, bending can occur at the hinge 49 portion. Further, for the other configuration, the same configuration as the second holder used in the method of manufacturing a wire harness according to any one of the embodiments of the present invention may be used. In addition, first holder 1e is also divided at a portion where bending is performed. That is, first holder 1e is composed of a plurality of members. For the other configuration, the same configuration as the first holder used in the method of manufacturing a wire harness according to any one of the embodiments of the present invention may be used.

Further, as shown in FIG. 28, the divided position of second holder 4e (= coupled position by the hinge 49) and the divided position of first holder 1e are disposed between an upper mold 6b for bending and a lower mold 7b for bending. Next, as shown in FIG. 29, the portion of the wire harness 9 is bent with the positions in between the upper mold 6b for bending and the lower mold 7b for bending. In this state, the portion of the wire harness 9 is heated. For the heating method, any one of the methods described above may be used.

According to this configuration, it is possible to bend only necessary portions, such that it is possible to prevent unintended deformation at non-bending portions.

### [Industrial Applicability]

Various embodiments of the present invention were described above in detail, but the present invention is not limited to the above embodiments and may be modified in various ways without departing from the spirit of the present invention.

For example, in the methods of manufacturing a wire harness according to the respective embodiments of the present invention, although a configuration in which a wire is placed between two thermoplastic materials, the thermoplastic material and the other thermoplastic material, is described, it may be possible to cover the wire therein by bending one thermoplastic material.

Further, in the methods of manufacturing a wire harness according to the embodiments of the present invention, a configuration in which the main body portion has a substantially hexagonal cross-section is described, but the cross-sectional shape of the portion of the wire harness is not limited thereto. In general, the cross-sectional shape of the portion of the wire harness is set depending on the shape of the place where the portion of the manufactured wire harness is wired.

For example, the cross-sectional shape of the main body portion 941 may be a circle or a rectangle. Further, the shape may be asymmetric in the up-down and left-right directions. When the cross-sectional shape of the main body portion 941 is an approximate circle, a groove-shaped recessed portion having an approximate circular cross-section may be formed on the top of the first holder and pressing portions may be formed at both sides of the groove-shaped recessed portion. In addition, a groove-shaped recessed portion having an approximately circular cross-section may be formed at the lower side of the upper mold (the lower side of the second holder when the second holder is used) and pressing portions may be formed at both sides of the groove-shaped recessed portion. When the cross-sectional shape of the main body portion 941 is approximately a rectangle, a groove-shaped recessed portion having an approximately rectangular cross-section is formed on the top of the first holder and pressing portions may be formed at both sides of the groove-shaped recessed portion. Further, a groove-shaped recessed portion having a rectangular cross-section may be formed at the lower side of the upper mold (the lower side of the second holder when the second holder is used) and pressing portions may be formed at both sides of the groove-shaped recessed portion. As described above, it is possible to form wire harnesses having various cross-sectional shapes by forming the groove-shaped recessed portion formed at the upper side of the first holder and the groove-shaped recessed portion formed at the lower side of the upper mold (the lower side of the second holder when the second holder is used) in given shapes.

## Claims

1. A method of manufacturing a wire harness having a portion of a wire covered around with thermoplastic materials, the method comprising:
mounting the portion of the wire and the thermoplastic materials on an upper side of a first holder such that the portion of the wire is disposed between the thermoplastic materials,
pressing a lower side of the first holder by one of a heater-equipped pair of molds and pressing the thermoplastic materials, that are mounted on the first holder and between which the portion of the wire is disposed, by the other of the pair of molds, thereby press-forming and heating, to a given temperature, the thermoplastic materials that are mounted on the upper side of the first holder and between which the portion of the wire is disposed, so that the portion of the wire is covered around with the thermoplastic materials and that mutually contacting surfaces of the thermoplastic materials are welded, and
thereafter, removing the portion of the wire that is covered with the thermoplastic materials from the pair of molds, with the portion of the wire that is covered with the thermoplastic materials mounted on the upper side of the first holder.

2. The method of manufacturing a wire harness according to claim 1, further comprising, after removing the portion of the wire that is covered with the thermoplastic materials from the pair of molds with the portion of the wire that is covered with the thermoplastic materials mounted on the upper side of the first holder, cooling the thermoplastic materials, with the portion of the wire that is covered with the thermoplastic materials mounted on the upper side of the first holder.

3. The method of manufacturing a wire harness according to claim 1 or 2, wherein at least one of said other of the pair of molds and the upper side of the first holder is formed with a recessed portion configured to accommodate the portion of the wire, and a pressing portion is formed outside the recessed portion to apply a compression force to the mutually contacting surface of the thermoplastic materials, so that portions of the contacting surfaces of the thermoplastic materials where the compression force is applied by the pressing portion are welded.

4. A method of manufacturing a wire harness having a portion of a wire covered with thermoplastic materials, the method comprising:
placing the portion of the wire and the thermoplastic materials between an upper side of a first holder and a lower side of a second holder such that the portion of the wire is disposed between the thermoplastic materials,
pressing a lower side of the first holder by one of a heater-equipped pair of molds and pressing an upper side of the second holder by the other of the pair of molds, thereby press-forming and heating, to a given temperature, the thermoplastic materials that are held between the first holder and the second holder and between which the portion of the wire is disposed, so that the portion of the wire is covered around with the thermoplastic materials and that mutually contacting surfaces of the thermoplastic materials are welded, and
thereafter, removing the portion of the wire that is covered with the thermoplastic materials from the pair of molds, with the portion of the wire that is covered with the thermoplastic materials held between the first holder and the second holder.

5. The method of manufacturing a wire harness according to claim 4, further comprising, after removing the portion of the wire that is covered with the thermoplastic materials from the pair of molds with the portion of the wire that is covered with the thermoplastic materials held between the first holder and the second holder, cooling the thermoplastic materials, with the portion of the wire that is covered with the thermoplastic materials held between the first holder and the second holder.

6. The method of manufacturing a wire harness according to claim 4 or 5, wherein at least one of the upper side of the first holder and the lower side of the second holder is formed with a recessed portion configured to accommodate the portion of the wire, and a pressing portion is formed outside the recessed portion to apply a compression force to the mutually contacting surface of the thermoplastic materials, so that portions of the contacting surfaces of the thermoplastic materials where the compression force is applied by the pressing portion are welded.

7. The method of manufacturing a wire harness according to claim 3 or 6, wherein a surface portion of a portion of the thermoplastic materials that is fitted in the recessed portion is plastically deformed by heating the surface portion to the given temperature and hardened, so that a hardness thereof is higher as compared with a central portion of the portion of the thermoplastic materials that is fitted in the recessed portion.

8. The method of manufacturing a wire harness according to any one of claims 3, 6 or 7, wherein guide pins are provided to protrude from the first holder to position the wire in the recessed portion, so that the portion of the wire is positioned by the guide pins protruding through and out of the thermoplastic materials.

9. The method of manufacturing a wire harness according to any one of claims 1 to 8, wherein the pair of molds is formed with shearing step-surfaces configured to cut off unnecessary portions of the thermoplastic materials, so that the unnecessary portions of the thermoplastic materials are cut off when press-forming the thermoplastic materials between which the portion of the wire is disposed.

10. The method of manufacturing a wire harness according to any one of claims 1 to 9, wherein a reinforcing thermoplastic material is disposed between the thermoplastic materials together with the portion of the wire,
wherein the reinforcing thermoplastic material is also press-formed when press-forming and heating, to the given temperature, the thermoplastic materials between which the portion of the wire is disposed, so that the portion of the wire is covered around with the thermoplastic materials and that contacting surfaces of the reinforcing thermoplastic material and the thermoplastic materials are welded.

11. The method of manufacturing a wire harness according to any one of claims 1 to 10, wherein a pressing protrusion is provided to protrude from at least one of the pair of molds to presses the thermoplastic materials, so that, when press-forming the thermoplastic materials between which the portion of the wire is disposed, the pressing protrusion bites into the thermoplastic materials, thereby pushing one of the mutually contacting surfaces of the thermoplastic materials, between which the portion of the wire is disposed, into the other of the mutually contacting surfaces.

12. The method of manufacturing a wire harness according to any one of claims 1 to 11, further comprising, before press-forming the thermoplastic materials between which the portion of the wire is disposed, fixing an attachment reinforcing member on the portion of the wire to improve an attachment strength between the wire and the thermoplastic materials.

13. The method of manufacturing a wire harness according to any one of claims 1 to 12, further comprising, before press-forming the thermoplastic materials between which the portion of the wire is disposed, attaching a shield member having an extending portion to an outer circumference of the portion of the wire, so that the thermoplastic materials are press-formed with the extending portion of the shield member held between the thermoplastic materials, and attaching a fastener to the thermoplastic materials such that the fastener is electrically coupled to the extending portion of the shield member.

14. The method of manufacturing a wire harness according to any one of claims 1 to 13, further comprising, after removing the portion of the wire that is covered with the thermoplastic materials from the pair of molds, heating the portion of the wire that is covered with the thermoplastic materials while pressing and bending the portion of the wire, so that the portion of the wire that is covered with the thermoplastic materials is bent into a given shape.

15. The method of manufacturing a wire harness according to any one of claims 1 to 13, further comprising, after removing the portion of the wire that is covered with the thermoplastic materials from the pair of molds, and before the thermoplastic materials are cooled to a temperature where the thermoplastic materials are not softened, pressing the portion of the wire that is covered with the thermoplastic materials to bend the portion of the wire, so that the portion of the wire that is covered with the thermoplastic materials is bent into a given shape.
